# EUROPEAN PATENT APPLICATION

(11) **EP 3 214 043 A1**
(43) Date of publication of application: **06.09.2017**
(21) Application number: 15855106.9
(22) Date of filing: 08.10.2015
(51) Int. Cl.: C01F 7/00, B32B 9/00, B32B 18/00, H01M 2/16

(54) **METHOD FOR FORMING LAYERED DOUBLE HYDROXIDE DENSE MEMBRANE**

(30) Priority: 28.10.2014 JP 2014219756; 24.07.2015 JP 2015146875
(71) Applicant: NGK Insulators, Ltd., Nagoya-shi, Aichi 467-8530 (JP)
(72) Inventor: YOKOYAMA, Shohei, Nagoya-shi Aichi 467-8530 (JP); ASAI, Kouta, Nagoya-shi Aichi 467-8530 (JP); FUJISAKI, Megumi, Nagoya-shi Aichi 467-8530 (JP); YAMAMOTO, Sho, Nagoya-shi Aichi 467-8530 (JP); YAMADA, Naohito, Nagoya-shi Aichi 467-8530 (JP)
(74) Representative: Müller-Boré & Partner Patentanwälte PartG mbB
(86) International application number: PCT/JP2015/078654
(87) International publication number: WO 2016/067884

(57) **Abstract**

Provided is a method of forming a layered double hydroxide (LDH) dense membrane on the surface of a porous substrate. The LDH dense membrane is composed of an LDH represented by the formula: M2⁺₁₋ₓM³⁺ₓ(OH)₂Aⁿ⁻_{x/n}·mH₂O where M²⁺ represents a divalent cation, M³⁺ represents a trivalent cation, Aⁿ⁻ represents an n-valent anion, n is an integer of 1 or more, and x is 0.1 to 0.4. This method includes (a) providing a porous substrate, (b) evenly depositing, on the porous substrate, a nucleation material capable of providing a nucleus from which the crystal growth of the LDH starts; and (c) hydrothermally treating the porous substrate in an aqueous stock solution containing a constituent element of the LDH to form the LDH dense membrane on the surface of the porous substrate. The method of the present invention can form a highly-densified LDH membrane evenly on the surface of a porous substrate.

## Description

### TECHNICAL FIELD

The present invention relates to a method of forming a layered double hydroxide dense membrane. In particular, the present invention relates to a method of forming a layered double hydroxide dense membrane on the surface of a porous substrate.

### BACKGROUND ART

Layered double hydroxides (hereinafter also referred to as LDHs), such as hydrotalcite, are compounds that contain exchangeable anions between hydroxide layers. To make use of their characteristics, LDHs have been used as catalysts and absorbents, as well as dispersants in polymers in order to improve heat resistance of the polymers. In particular, LDHs have recently been attracting attention as materials that exhibits hydroxide ion conductivity, and studied for use as electrolytes in alkaline fuel cells or additives in catalytic layers of zinc-air batteries.

Their traditional uses, such as catalysts, require high specific surface area, and thus it was sufficient to synthesize and use LDH powder. Meanwhile, in uses such as electrolytes in, for example, alkaline fuel cells making use of hydroxide ion conductivity, a high-density LDH membrane is desirable in order to prevent fuel gas from admixing and ensure sufficient electromotive force.

Patent Documents 1 and 2 and Non-Patent Document 1 disclose oriented LDH membranes. These oriented LDH membranes are produced by horizontally suspending the surface of a polymer substrate in a solution that contains urea and a metal salt to cause nucleation and oriented growth of LDH. The oriented LDH membranes of these Documents each show a strong peak of (003) plane in the X-ray diffraction pattern.

### CITATION LIST

### PATENT DOCUMENTS

Patent Document 1: CNC1333113
Patent Document 2: WO2006/050648

### NON-PATENT DOCUMENT

Non-Patent Document 1: Zhi Lu, Chemical Engineering Science, 62, pp.6069-6075(2007), "Microstructure-controlled synthesis of oriented layered double hydroxide thin films: Effect of varying the preparation conditions and a kinetic and mechanistic study of film formation"

### SUMMARY OF INVENTION

The present inventors have in advance successfully produced an LDH dense bulk block (hereinafter referred to as an LDH dense body). In addition, an experiment on hydroxide ion conductivity of the LDH dense body has revealed that the LDH dense body exhibits a high ion conductivity along the layers of LDH particles. Unfortunately, for the purpose of using LDH for solid electrolyte separators of alkaline secondary batteries, e.g., zinc-air batteries and nickel-zinc batteries, the LDH dense body is inadequate due to its high resistivity. For this use of LDH, it is needed to produce a thin LDH membrane that exhibits low resistivity. In this respect, the oriented LDH membranes disclosed in Patent Documents 1 and 2 and Non-Patent Document 1 are inadequate in view of their LDH orientations and density. Hence, a high density LDH membrane, preferably an oriented LDH membrane, is desired. Use of such an LDH membrane as a solid electrolyte separator further requires a porous substrate for supporting the LDH membrane to facilitate movement of hydroxide ions in the electrolyte solution through the LDH membrane. Unfortunately, difficulty is encountered in evenly forming an LDH dense membrane (which is desired to have no pores) on a porous substrate (which has numerous pores) because the LDH membrane and the substrate are required to exhibit incompatible properties.

The present inventors have found that a highly-densified LDH membrane can be evenly formed on the surface of a porous substrate through even deposition, on the porous substrate, of a material capable of providing a nucleus from which LDH crystal growth starts and subsequent hydrothermal treatment of the porous substrate.

An object of the present invention is to provide a method of evenly forming a highly-densified LDH membrane on the surface of a porous substrate.

An aspect of the present invention provides a method of forming a layered double hydroxide dense membrane on the surface of a porous substrate, the layered double hydroxide dense membrane comprising a layered double hydroxide represented by the formula: M²⁺₁₋ₓM³⁺x(OH)₂Aⁿ⁻_{x/n}·mH₂O where M²⁺ represents a divalent cation, M³⁺ represents a trivalent cation, Aⁿ⁻ represents an n-valent anion, n is an integer of 1 or more, x is 0.1 to 0.4, and m is any real number, the method comprising the steps of:
(a) providing a porous substrate;
(b) evenly depositing, on the porous substrate, a nucleation material capable of providing a nucleus from which the crystal growth of the layered double hydroxide starts; and
(c) hydrothermally treating the porous substrate in an aqueous stock solution containing a constituent element of the layered double hydroxide to form the layered double hydroxide dense membrane on the surface of the porous substrate.

Another aspect of the present invention provides a method of using a layered double hydroxide dense membrane, comprising utilizing a layered double hydroxide dense membrane formed by the aforementioned method as a separator for a battery.

### BRIEF DESCRIPTION OF DRAWINGS

Fig. 1 is a schematic cross-sectional view of an LDH-containing composite material according to an embodiment obtained by the method of the present invention.
Fig. 2 is a schematic cross-sectional view of an LDH-containing composite material according to another embodiment.
Fig. 3 is a schematic diagram of a platy particle of layered double hydroxide (LDH).
Fig. 4A is an exploded perspective view of a system for evaluating and measuring density used in density evaluation test I in Examples 1 and 2.
Fig. 4B a schematic cross-sectional view of a system for evaluating and measuring density used in density evaluation test I in Examples 1 and 2.
Fig. 5A is an exploded perspective view of a hermetic container used in density evaluation test II in Examples 1 and 2.
Fig. 5B is a schematic cross-sectional view of a system used in density evaluation test II in Examples 1 and 2.
Fig. 6A is a SEM image of a surface microstructure of sample 1-1 in Example A1 (Comparative).
Fig. 6B is a SEM image of a surface microstructure of sample 1-1 (observed in a visual field different from that of Fig. 6A) in Example A1 (Comparative).
Fig. 6C is a SEM image of a surface microstructure of sample 1-2 in Example A1 (Comparative).
Fig. 7A is a SEM image of a surface microstructure of sample 2-1 in Example A2.
Fig. 7B is a SEM image of a surface microstructure of sample 2-1 (observed in a visual field different from that of Fig. 7A) in Example A2.
Fig. 7C is a SEM image of a surface microstructure of sample 2-2 in Example A2.
Fig. 8 is a SEM image of a surface microstructure of sample 3 in Example A3.
Fig. 9A is a SEM image of a surface microstructure of sample 4-1 in Example A4.
Fig. 9B is a SEM image of a surface microstructure of sample 4-1 (observed in a visual field different from that of Fig. 9A) in Example A4.
Fig. 9C is a SEM image of a surface microstructure of sample 4-2 in Example A4.
Fig. 10 is a SEM image of a surface microstructure of sample 5 in Example A5.
Fig. 11 is a SEM image of a surface microstructure of sample 6 in Example A6.
Fig.12 shows transmission spectrum of sulfonated polystyrene plates prepared by soaking in concentrated sulfuric acid for different times in Example B1, taken by an ATR method of FT-IR.
Fig. 13 shows an XRD profile of a crystalline phase of sample 9 in Example B2.
Fig. 14 shows SEM images of surface microstructures of samples 1 to 6 in Example B3.
Fig. 15 shows SEM images of surface microstructures of samples 9 to 16 in Example B3.
Fig. 16 shows a SEM image of a surface microstructure of comparative sample 18 in Example B3.
Fig. 17 shows a SEM image of a microstructure at a fracture surface of sample 9 in Example B3.
Fig. 18 shows a SEM image of a microstructure at a polished surface of sample 9 in Example B3.
Fig. 19 shows a SEM image of a microstructure at a polished surface of sample 2 in Example B3.

### DESCRIPTION OF EMBODIMENTS

### Method of Forming LDH Dense Membrane

The present invention relates to a method of forming a layered double hydroxide dense membrane (LDH dense membrane) on the surface of a porous substrate. As used herein, "the surface of a porous substrate" generally refers to the outermost surface of the porous substrate, which has a platy shape under macroscopic observation of the substrate, and may also refer to the surfaces of pores present in the vicinity of the outermost surface of the platy porous substrate under microscopic observation of the substrate. The LDH dense membrane comprises a layered double hydroxide (LDH) represented by the general formula M²⁺ᵢ₋ₓM³⁺ₓ(OH)₂Aⁿ⁻_{x/n}·mH₂O (where M²⁺ represents a divalent cation, M³⁺ represents a trivalent cation, Aⁿ⁻ represents an n-valent anion, n represents an integer not less than 1, x represents a value of 0.1 to 0.4, and m represents any real number). In addition, the functional layer exhibits water impermeability. In the general formula, M²⁺ may represent any divalent cation; preferably, M²⁺ represents, for example, Mg²⁺, Ca²⁺ and/or Zn²⁺, and more preferably Mg²⁺. M³⁺ may represent any trivalent cation; preferably, M³⁺ represents, for example, Al³⁺ and/or Cr³⁺, and more preferably Al³⁺. Aⁿ⁻ may represent any anion, and preferably, for example, OH⁻ and/or CO₃²⁻. Hence, it is preferable that, in the general formula, M²⁺ comprises Mg²⁺, M³⁺ comprises Al³⁺, and Aⁿ⁻ comprises OH⁻and/or CO₃²⁻. In the general formula, n represents an integer not less than 1, and preferably 1 or 2; x represents a value of 0.1 to 0.4, and preferably 0.2 to 0.35; and m represents a value not less than 0, and more preferably a real number or an integer more than 0 or not less than 1.

The method of the present invention forms an LDH dense membrane by (a) providing a porous substrate, (b) evenly depositing, on the porous substrate, a nucleation material capable of providing a nucleus from which LDH crystal growth starts (hereinafter the material may be referred to as "nucleation material"), and (c) hydrothermally treating the porous substrate. Thus, a highly-densified LDH membrane can be evenly formed on the surface of a porous substrate through even deposition, on the porous substrate, of a nucleation material capable of providing a nucleus from which LDH crystal growth starts and subsequent hydrothermal treatment of the porous substrate. As described above, difficulty is encountered in evenly forming an LDH dense membrane (which is desired to have no pores) on a porous substrate (which has numerous pores) because the LDH membrane and the substrate are required to exhibit incompatible properties. The method of the present invention, however, can preliminarily deposit a nucleation material evenly on a porous substrate to evenly provide the porous substrate with a nucleus from which LDH crystal growth starts, to promote even LDH crystal growth from the nucleus. Thus, a highly-densified LDH membrane can be evenly formed on the surface of a porous substrate.

### (a) Provision of Porous Substrate

Step (a) involves provision of a porous substrate. The porous substrate may be composed of any material and may have any porous structure so long as a desired LDH dense membrane can be formed on the surface of the porous substrate. The porous substrate preferably has a water-permeable porous structure because such a structure enables an electrolytic solution to come into contact with the LDH dense membrane in the case of the use of the porous substrate as a separator for a battery.

The porous substrate is preferably composed of at least one selected from the group consisting of ceramics, metals and polymers. More preferably, the porous substrate is composed of a ceramic. Preferred examples of the ceramics include alumina, zirconia, titania, magnesia, spinel, calcia, cordierite, zeolite, mullite, ferrite, zinc oxide, silicon carbide, and a combination thereof. Alumina, zirconia, titania, and a combination thereof are more preferred. Alumina, zirconia (e.g., yttria-stabilized zirconia (YSZ)), and a combination thereof are further preferred. Use of these porous ceramic facilitates improvement in density of the LDH dense membrane. Preferred examples of the metals include aluminum and zinc. Preferred examples of the polymers include polystyrene, polyether sulfone, polypropylene, epoxy resins, polyphenylene sulfide, hydrophilized fluororesins (e.g., poly(tetrafluoroethylene) (PTFE)), and a combination thereof. The preferred materials described above all have alkali resistance, in other words, resistance to an electrolyte solution of a battery. In the case of a porous substrate, the porous substrate is preferably cleaned, for example, by ultrasonic cleaning or with ion-exchanged water.

As described above, the porous substrate is more preferably composed of a ceramic material. The ceramic porous substrate may be a commercially available one or may be prepared by any known process. For example, the ceramic porous substrate may be prepared as follows: Ceramic powder (e.g., zirconia powder, boehmite powder, or titania powder), methyl cellulose, and deionized water are mixed in predetermined proportions; the resultant mixture is subjected to extrusion molding; the molded product is dried at 70 to 200°C for 10 to 40 hours; and the dried product is fired at 900 to 1,300°C for one to five hours. The amount of methyl cellulose is preferably 1 to 20 parts by weight relative to 100 parts by weight of the ceramic powder. The amount of deionized water is preferably 10 to 100 parts by weight relative to 100 parts by weight of the ceramic powder.

The porous substrate has an average pore diameter of preferably from 0.001 to 1.5 µm, more preferably from 0.001 to 1.25 µm, still more preferably from 0.001 to 1.0 µm, particularly preferably from 0.001 to 0.75 µm, and most preferably from 0.001 to 0.5 µm. These ranges make it possible to form a LDH dense membrane exhibiting water impermeability (desirably both water impermeability and gas impermeability) while ensuring desired water permeability in the porous substrate. Throughout the specification, the term "water impermeability" indicates that water in contact with one side of an object (i.e., the LDH dense membrane and/or the porous substrate) does not pass through to the other or opposite side during the "density evaluation test I" performed in Examples described later or any other equivalent method or system. In the present invention, the average pore diameter can be measured by measuring the longest diameter of each pore in an electron microscopic image of the surface of the porous substrate. The magnification of the electron microscopic image used in this measurement is not less than 20,000. All of the measured pore diameters are listed in the ascending order from the shortest one to calculate the average, from which the subsequent 15 larger diameters and the subsequent 15 smaller diameters, i.e., 30 diameters in total, are selected in one field of view. Subsequently, the selected diameters of two fields of view are averaged to obtain the average pore diameter. The diameters can be measured by, for example, a length-measuring function of a SEM or an image analysis software (e.g., Photoshop, Adobe).

The surface of the porous substrate has a porosity of preferably from 10 to 60%, more preferably from 15 to 55%, and further more preferably from 20 to 50%. These ranges make it possible to form a LDH dense membrane that exhibits water impermeability (desirably both water impermeability and gas impermeability) while ensuring desired water permeability of the porous substrate. The surface porosity of the porous substrate is adopted because it can readily be measured by image processing described below and substantially reflects the internal porosity of the porous substrate. In other words, if the surface of the porous substrate is dense, the inside of the porous substrate is dense, too. In the present invention, the porosity at the surface of the porous substrate can be measured by a method involving image processing, in accordance with the following procedures: 1) an electron microscopic image (SEM) of the surface of the porous substrate is taken at a magnification of not less than 10,000; 2) the grayscale SEM image is read with an image analysis software, such as Photoshop (Adobe); 3) a monochromatic binary image is generated with tools named [image], [color compensation] and [binarization] in this order; and 4) the porosity (%) is calculated by dividing the number of pixels of the black area(s) by the number of the pixels of the whole image. Preferably, the porosity is measured over a 6 µm × 6 µm area of the surface of the porous substrate by image processing. More preferably, the porosity is determined by averaging the porosity in three 6 µm × 6 µm areas selected at random for objective evaluation.

### (b) Deposition of Nucleation Material

Step (b) involves deposition, on the porous substrate, of a material capable of providing a nucleus from which LDH crystal growth starts. The even deposition of such a nucleation material on the surface of the porous substrate and subsequent step (c) can form a highly-densified LDH membrane evenly on the porous substrate. The nucleus is preferably, for example, a chemical species providing an anion that can enter between layers of an LDH, a chemical species providing a cation that can constitute an LDH, or an LDH.

### (i) Anion-Providing Chemical Species

The nucleus for LDH crystal growth may be a chemical species providing an anion that can enter between LDH layers. Examples of the anion include CO₃²⁻, OH⁻, SO₃⁻, SO₃²⁻, SO₄²⁻, NO₃⁻, Cl⁻, Br⁻ and any combination thereof. A material capable of providing such a nucleus may be evenly deposited on the surface of the porous substrate by a process suitable for the material. The deposition of such an anion-providing chemical species on the surface of the porous substrate leads to adsorption of a metal cation (e.g., Mg²⁺ or Al³⁺) onto the surface of the porous substrate, resulting in nucleation of the LDH. Thus, subsequent step (c) can evenly form a highly-densified LDH membrane on the surface of the porous substrate.

In a preferred embodiment of the present invention, the nucleation material may be deposited on the porous substrate through deposition of a polymer on the surface of the porous substrate and subsequent introduction of an anion-providing chemical species into the polymer. In this embodiment, the anion is preferably SO₃⁻, SO₃²⁻, and/or SO₄²⁻. Such an anion-providing chemical species is preferably introduced into the polymer by sulfonation. The polymer may be an anionizable (in particular, sulfonatable) polymer. Examples of such a polymer include polystyrene, polyether sulfone, polypropylene, epoxy resins, poly(phenylene sulfide), and any combination thereof. Aromatic polymers are particularly preferred because they are readily anionized (in particular, sulfonated). Examples of the aromatic polymers include polystyrene, polyether sulfone, epoxy resins, poly(phenylene sulfide), and any combination thereof. Most preferred is polystyrene. The deposition of the polymer on the porous substrate preferably involves application of a polymer solution to the surface of the porous substrate (preferably, to particles forming the outermost surface of the platy porous substrate). The polymer solution can be readily prepared by, for example, dissolution of a solid polymer (e.g., a polystyrene substrate) in an organic solvent (e.g., xylene). For even coating of the porous substrate with the polymer, the polymer solution is preferably applied to the substrate such that the solution does not permeate the substrate. Thus, spin coating is preferably used for very even deposition or application of the polymer solution. The spin coating may be performed under any conditions; for example, a rotation rate of 1,000 to 10,000 rpm and an operational period of about 60 to 300 seconds (including dropwise addition and drying). The sulfonation may be performed by immersing the polymer-deposited porous substrate in an acid capable of sulfonation, such as sulfuric acid (e.g., concentrated sulfuric acid), fuming sulfuric acid, chlorosulfonic acid, and sulfuric anhydride. Any other sulfonation techniques may also be used. The porous substrate may be immersed in such a sulfonating acid at room temperature or a high temperature (e.g., 50 to 150°C) for any period of time (e.g., 1 to 14 days).

In another preferred embodiment of the present invention, the nucleation material may be deposited on the porous substrate through deposition of carbon (typically a carbon membrane or a carbon layer) on the surface of the porous substrate and subsequent bonding of an anion-providing chemical species to the carbon. In this embodiment, the anion is preferably SO₃⁻, SO₃²⁻, and/or SO₄²⁻. Such an anion-providing chemical species is preferably bonded to carbon by sulfonation. Carbon is preferably vapor-deposited on the porous substrate. The vapor deposition of carbon may be performed with a commercially available deposition apparatus by any known technique, such as flash deposition. For even deposition of carbon on the porous substrate, the substrate is preferably rotated during vapor deposition of the carbon. Alternatively, the deposition of carbon on the porous substrate preferably involves application of a resin to the substrate and carbonization of the resin, more preferably involves application of a resin to the substrate, thermal curing of the resin, and carbonization of the resin. The resin may be of any type that can be carbonized. The resin is preferably, for example, a polyimide resin, a lignin resin, or a phenolic resin, particularly preferably a polyimide resin. The resin applied to the substrate is preferably in the form of a solution (e.g., a varnish). For even coating of the porous substrate with the resin, the resin solution is preferably applied to the substrate such that the solution does not permeate the substrate. Thus, spin coating is preferably used for very even deposition or application of the resin. The spin coating may be performed under any conditions; for example, a rotation rate of 1,000 to 10,000 rpm and an operational period of about 60 to 300 seconds (including dropwise addition and drying). The thermal curing of the resin preferably involves heating of the resin in air at 100 to 300°C for 1 to 10 hours. The carbonization of the resin preferably involves heating of the resin under vacuum at 500 to 1,000°C for 1 to 10 hours. The sulfonation may be performed by immersing the carbon-deposited porous substrate in an acid capable of sulfonation, such as sulfuric acid (e.g., concentrated sulfuric acid), fuming sulfuric acid, chlorosulfonic acid, or sulfuric anhydride. Any other sulfonation techniques may also be used. The porous substrate may be immersed in such a sulfonating acid at room temperature or a high temperature (e.g., 50 to 150°C) for any period of time (e.g., 1 to 14 days).

In still another preferred embodiment of the present invention, the nucleation material may be deposited on the porous substrate through treatment of the surface of the substrate with a surfactant containing an anion-providing chemical species as a hydrophilic moiety. In this embodiment, the anion is preferably SO₃⁻, SO₃²⁻, and/or SO₄²⁻. Typical examples of such a surfactant include anionic surfactants. Preferred examples of the anionic surfactant include sulfonate anionic surfactants, sulfate anionic surfactants, and any combination thereof. Examples of the sulfonate anionic surfactants include (sodium naphthalenesulfonate)-formalin condensate, disodium polyoxyethylene alkyl sulfosuccinate, poly(sodium styrenesulfonate), sodium dioctyl sulfosuccinate, and polyoxyethylene lauryl ether sulfate triethanolamine. Examples of the sulfate anionic surfactants include sodium polyoxyethylene lauryl ether sulfate. The porous substrate may be treated with a surfactant by any process that can deposit the surfactant on the surface of the substrate; for example, application of a surfactant-containing solution to the porous substrate, or immersion of the porous substrate in a surfactant-containing solution. The porous substrate may be immersed in the surfactant-containing solution with agitation of the solution at room temperature or a high temperature (e.g., 40 to 80°C) for any period of time (e.g., one to seven days).

### (ii) Cation-Providing Chemical Species

The nucleus for LDH crystal growth may be a chemical species providing a cation that can constitute a layered double hydroxide. The cation is preferably, for example, Al³⁺. The cation is also preferably, for example, at least one of Mn²⁺, Mn³⁺, and Mn⁴⁺. In the case where the cation is Al³⁺, the nucleation material is preferably at least one aluminum compound selected from the group consisting of oxides, hydroxides, oxyhydroxides, and hydroxy complexes of aluminum. In the case where the cation is at least one of Mn²⁺, Mn³⁺, and Mn⁴⁺, the nucleation material is preferably manganese oxide. The manganese oxide may be in a crystalline or amorphous form or may be in a combination of these forms. The crystalline manganese oxide is preferably manganese oxide having an oxidation number of 2 to 4, such as MnO, MnO₂, Mn₃O₄ or Mn₂O₃ more preferably MnO₂ or Mn₂O₃. The amorphous manganese oxide is preferably manganese oxide having an oxidation number of 2 to 4 (e.g., about 4), although the proportions of manganese and oxygen are not constant and the formula of manganese oxide is not univocally determined. A nucleation material capable of providing such a nucleus may be evenly deposited on the surface of the porous substrate by a process suitable for the material. The deposition of such a cation-providing chemical species on the surface of the porous substrate leads to adsorption of an anion that can enter between LDH layers on the surface of the porous substrate, resulting in nucleation of the LDH. Thus, subsequent step (c) can evenly form a highly-densified LDH membrane on the surface of the porous substrate.

In a preferred embodiment of the present invention, the nucleation material may be deposited on the porous substrate through application of a sol containing an aluminum compound to the porous substrate. Preferred examples of the aluminum compound include boehmite (AIOOH), aluminum hydroxide (Al(OH)₃), and amorphous alumina. Most preferred is boehmite. Spin coating is preferably used for very even application of the sol containing the aluminum compound. The spin coating may be performed under any conditions; for example, a rotation rate of 1,000 to 10,000 rpm and an operational period of about 60 to 300 seconds (including dropwise addition and drying).

In another preferred embodiment of the present invention, the nucleation material may be deposited on the porous substrate by hydrothermal treatment of the porous substrate in an aqueous solution containing at least aluminum to form an aluminum compound on the surface of the porous substrate. The aluminum compound to be formed on the surface of the porous substrate is preferably Al(OH)₃. The LDH membrane on the porous substrate (in particular, a ceramic porous substrate) tends to form crystalline and/or amorphous Al(OH)₃ at the initial growth stage. LDH growth may start from the Al(OH)₃ serving as a nucleus. Thus, the even deposition of Al(OH)₃ on the surface of the porous substrate by hydrothermal treatment and subsequent step (c) (which also involves hydrothermal treatment) can form a highly-densified LDH membrane evenly on the surface of the porous substrate. In this embodiment, steps (b) and (c) may be continuously performed in the same hermetic container, or may be separately performed in this order.

If steps (b) and (c) are continuously performed in the same hermetic container, an aqueous stock solution used in step (c) (i.e., an aqueous solution containing a constituent element of the LDH) may be used in step (b). In such a case, the hydrothermal treatment in step (b) is performed in a hermetic container (preferably an autoclave) in an acidic or neutral pH range (preferably at a pH of 5.5 to 7.0) at a relatively low temperature of 50 to 70°C, to promote nucleation of Al(OH)₃ instead of the LDH. After the nucleation of Al(OH)₃, the aqueous stock solution is maintained at the nucleation temperature or heated from the temperature, to promote hydrolysis of urea, resulting in an increase in pH of the aqueous stock solution. Thus, step (b) is smoothly followed by step (c) in a pH range suitable for LDH growth (preferably a pH of more than 7.0).

If steps (b) and (c) are separately performed in this order, different aqueous stock solutions are preferably used for steps (b) and (c). For example, step (b) preferably involves the use of an aqueous stock solution mainly containing an Al source (preferably, not containing a metal other than Al) for nucleation of Al(OH)₃. In this case, the hydrothermal treatment in step (b) may be performed at 50 to 120°C in a hermetic container (preferably an autoclave) different from that used in step (c). Preferred examples of the aqueous stock solution mainly containing an Al source include an aqueous solution containing aluminum nitrate and urea but not containing a magnesium compound (e.g., magnesium nitrate). The use of the Mg-free aqueous stock solution can avoid precipitation of the LDH, resulting in promotion of nucleation of Al(OH)₃.

In still another preferred embodiment the present invention, the nucleation material may be deposited on the porous substrate through vapor deposition of aluminum on the surface of the porous substrate and then conversion of the aluminum into an aluminum compound by hydrothermal treatment in an aqueous solution. The aluminum compound is preferably Al(OH)₃. In particular, the conversion of aluminum into Al(OH)₃ promotes LDH growth from the Al(OH)₃ serving as a nucleus. Thus, the even formation of Al(OH)₃ on the surface of the porous substrate by hydrothermal treatment and subsequent step (c) (which also involves hydrothermal treatment) can form a highly-densified LDH membrane evenly on the surface of the porous substrate. The vapor deposition of aluminum may involve physical or chemical vapor deposition, and preferably involves physical vapor deposition, such as vacuum deposition. The hydrothermal treatment for conversion of aluminum into Al(OH)₃ may use any aqueous solution containing a component that can react with the deposited Al to form Al(OH)₃.

In yet another preferred embodiment of the present invention, the nucleation material may be deposited on the porous substrate by process (i) involving application of a sol containing manganese oxide to the porous substrate, or process (ii) involving application of a solution or sol containing a manganese compound that is capable of forming manganese oxide by heating, and subsequent oxidative decomposition of the manganese compound by thermal treatment into manganese oxide. Preferred examples of the manganese compound include manganese nitrate, manganese chloride, manganese carbonate, and manganese sulfate. Particularly preferred is manganese nitrate. Spin coating is preferably used for very even application of the sol containing manganese oxide or the manganese compound. The spin coating may be performed under any conditions; for example, a rotation rate of 1,000 to 10,000 rpm and an operational period of about 5 to 60 seconds. The oxidative decomposition of the manganese compound is preferably performed by thermal treatment at 150 to 1,000°C for five minutes to five hours. In process (i) or (ii) described above, the manganese oxide may be in a crystalline or amorphous form or may be in a combination of these forms. The crystalline manganese oxide is preferably manganese oxide having an oxidation number of 2 to 4, such as MnO, MnO₂, Mn₃O₄, or Mn₂O₃, more preferably MnO₂ or Mn₂O₃. The amorphous manganese oxide is preferably manganese oxide having an oxidation number of 2 to 4 (e.g., about 4), although the proportions of manganese and oxygen are not constant and the formula of manganese oxide is not univocally determined.

### (iii) LDH Serving as Nucleus

The crystal growth may start from an LDH. In this case, the LDH may be used as a nucleus from which LDH growth starts. Thus, the even deposition of the LDH nucleus on the surface of the porous substrate and subsequent step (c) can form a highly-densified LDH membrane evenly on the surface of the porous substrate.

In a preferred embodiment of the present invention, the nucleation material may be deposited on the porous substrate through application of an LDH-containing sol to the surface of the porous substrate. The LDH-containing sol may be prepared by any process; for example, dispersion of an LDH in a solvent, such as water. In this embodiment, spin coating is preferably used for very even application of the LDH-containing sol. The spin coating may be performed under any conditions; for example, a rotation rate of 1,000 to 10,000 rpm and an operational period of about 60 to 300 seconds (including dropwise addition and drying).

In another preferred embodiment of the present invention, the nucleation material may be deposited on the porous substrate through vapor deposition of aluminum on the surface of the porous substrate and then conversion of the (vapor-deposited) aluminum into an LDH by hydrothermal treatment in an aqueous solution containing a constituent element (other than aluminum) of the LDH. The vapor deposition of aluminum may involve physical or chemical vapor deposition, and preferably involves physical vapor deposition, such as vacuum deposition. The hydrothermal treatment for conversion of aluminum into the LDH may use an aqueous stock solution containing a component other than the vapor-deposited Al. The aqueous stock solution is preferably, for example, an aqueous stock solution mainly containing an Mg source, more preferably an aqueous solution containing magnesium nitrate and urea but not containing an aluminum compound (e.g., aluminum nitrate). The use of the Mg source-containing aqueous solution results in nucleation of the LDH together with the vapor-deposited Al.

### (c) Hydrothermal Treatment

Step (c) involves hydrothermal treatment of the porous substrate in an aqueous stock solution containing a constituent element of the LDH, to form an LDH dense membrane on the surface of the porous substrate. Since the nucleation material is evenly deposited on the surface of the porous substrate in step (b), a highly-densified LDH membrane can be evenly formed on the surface of the porous substrate.

Preferably, the aqueous stock solution contains magnesium ions (Mg²⁺) and aluminum ions (Al³⁺) in a certain total concentration and urea. Urea is hydrolyzed into ammonia and raises the pH of the aqueous stock solution (e.g., more than pH 7.0, preferably more than 7.0 and not more than 8.5), and metal ions co-existing in the aqueous stock solution are converted into hydroxides, whereby LDH is formed. The urea hydrolysis, which also generates carbon dioxide, can form LDH having carbonate ions as anions. The aqueous stock solution contains magnesium ions (Mg²⁺) and aluminum ions (Al³⁺) in a total concentration of preferably 0.20 to 0.40 mol/L, more preferably 0.22 to 0.38 mol/L, further more preferably 0.24 to 0.36 mol/L, and most preferably 0.26 to 0.34 mol/L. These concentration ranges facilitate the nucleation and the crystal growth in a balanced manner and can form a highly-oriented high-density LDH dense membrane. At a low total concentration of magnesium ions and aluminum ions, the crystal growth dominates over the nucleation, resulted in a decrease in the number of the LDH particles and an increase in the size of the LDH particles. At a high total concentration, the nucleation dominates over the crystal growth, resulted in an increase in the number of the LDH particles and a decrease in the size of the LDH particles.

The aqueous stock solution preferably contains dissolved magnesium nitrate and aluminum nitrate, and the aqueous stock solution thereby contains nitrate ions in addition to the magnesium ions and the aluminum ions. In this case, a molar ratio of the urea to the nitrate ions (NO₃⁻) (i.e., urea/NO₃⁻) in the aqueous stock solution ranges preferably from 2 to 6, and more preferably from 4 to 5.

The porous substrate may be soaked in an aqueous stock solution in a target direction (preferably horizontally or perpendicularly). To horizontally retain the porous substrate, the porous substrate may be hanged up in, suspended in or put on the bottom of a container of the aqueous stock solution. For example, the porous substrate may be immobilized and suspended in the stock solution and away from the bottom of the solution container. To perpendicularly retain the porous substrate, a fixture may be disposed that can holds the porous substrate perpendicularly to the bottom of the solution container. In each embodiment, a preferred configuration or arrangement is one that forms LDH substantially perpendicular (i.e., grows platy LDH particles oriented in such a manner that the tabular faces of the platy particles are substantially perpendicular to or oblique to the surface of the porous substrate) over, on and/or in the porous substrate.

Hydrothermal treatment of the porous substrate is performed in the aqueous stock solution to form the LDH dense membrane on the surface of the porous substrate. The hydrothermal treatment is performed in a sealed container (preferably an autoclave) at a temperature of preferably 60 to 150°C, more preferably 65 to 120°C, further more preferably 65 to 100°C, and most preferably 70 to 90°C. The hydrothermal treatment temperature may have any upper limit within the scope not causing thermal deformation of the porous substrate (e.g., the polymer substrate). The temperature can be raised at any rate in the hydrothermal treatment. The heating rate may range from 10 to 200°C/h, preferably from 100 to 200°C/h, and more preferably from 100 to 150°C/h. The time for the hydrothermal treatment may be determined depending on a target density and a target thickness of the LDH dense membrane.

After the hydrothermal treatment, the porous substrate is taken out from the sealed container, and then preferably cleaned with ion-exchanged water.

The resulting LDH dense membrane is composed of densely assembled platy LDH particles that are oriented in the substantially perpendicular direction, which direction is beneficial for the conductivity. Thus, the LDH dense membrane typically exhibits water impermeability (preferably both water impermeability and gas impermeability) because of its high density. The LDH dense membrane is typically composed of an aggregation of platy LDH particles, and these platy particles are oriented such that the tabular faces of the platy particles are substantially perpendicular to or oblique to the surface of the porous substrate. Therefore, in the case of using the LDH dense membrane that is dense and has sufficient gas-tight property in batteries, such as zinc-air batteries, the electricity generating capacity will increase. Furthermore, this LDH dense membrane is expected to be applicable to novel applications, such as a separator that can prevent zinc dendrite growth and carbon dioxide incorporation, which have been large technical barriers against forming a zinc-air secondary battery containing an electrolyte solution that has not been achieved. This LDH dense membrane functional layer can also be used in a separator of a nickel-zinc battery which has been known to cause growth of zinc dendrite growth being an obstacle for practical use of this battery.

The LDH dense membranes can be formed on and/or in both surfaces of the porous substrate by the above-described method. To produce the LDH dense membrane in a shape suitable for a separator, machine grinding of a LDH dense membrane on one surface of the porous substrate is preferably performed after the formation of the LDH dense membranes. Alternatively, it is desirable to take a measure so that the LDH dense membrane cannot be formed on one surface of the porous substrate.

### LDH Dense Membrane and LDH-Containing Composite Material

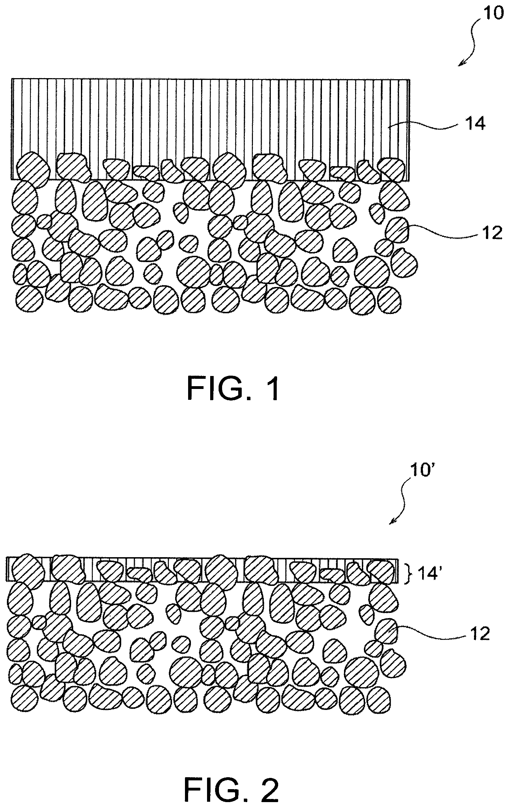

The method of the present invention can produce an LDH dense membrane and an LDH-containing composite material including the dense membrane. The LDH-containing composite material of the present embodiment comprises a porous substrate and a functional layer (typically a LDH dense membrane) that is formed on and/or in the porous substrate. The functional layer contains layered double hydroxide (LDH) represented by the general formula M²⁺₁₋ₓM³⁺x(OH)₂Aⁿ⁻_{x/n}·mH₂O, where M²⁺ represents a divalent cation, M³⁺ represents a trivalent cation, Aⁿ⁻ represents an n-valent anion, n represents an integer not less than 1, x represents a value of 0.1 to 0.4, and m represents any real number). The functional layer exhibits water impermeability (desirably both water impermeability and gas impermeability). The porous substrate may exhibit water permeability due to its pores, whereas the functional layer exhibits water impermeability due to a high density of LDH. Preferably, the functional layer is formed on the porous substrate. With reference to Fig. 1, a functional layer 14 as an LDH dense membrane is formed preferably on a porous substrate 12 in an LDH-containing composite material 10, for example. It should be noted that the porous substrate 12 allows LDH to be formed in pores in the surface and its vicinity of the porous substrate 12 as shown in Fig. 1. Alternatively, as in the case of an LDH-containing composite material 10' shown in Fig. 2, high density LDH may be formed in the porous substrate 12 (for example, in pores in the surface and its vicinity of the porous substrate 12), whereby at least a portion of the porous substrate 12 may constitute a functional layer 14'. The composite material 10' shown in Fig. 2 lacks a pure membrane portion of the functional layer 14 of the composite material 10 in Fig. 1. Alternatively, the functional layer 14' may have any other structure parallel to the surface of the porous substrate 12. In each embodiment of the LDH-containing composite material, the functional layer is dense and exhibits water impermeability.

As described above, the LDH-containing composite material of the present embodiment has the porous substrate which exhibits water permeability and, nevertheless, has the dense functional layer which exhibits water impermeability (desirably both water impermeability and gas impermeability). Hence, the LDH-containing composite material of the present embodiment as a whole exhibits hydroxide ion conductivity but exhibits water impermeability, and thus can function as a separator of a battery. LDH dense bulk blocks are not suitable for solid electrolyte separators of batteries due to their high resistivity, as described above. In contrast, the functional layer of the composite material of the present embodiment can be thin and have low resistivity by virtue of the porous substrate which gives strength to the composite material of the present invention. In addition, the porous substrate may exhibit water permeability, whereby the electrolyte solution can come into contact with the LDH-containing functional layer when the composite material of the present invention is used as a solid electrolyte separator of a battery. That is, the LDH-containing composite material of the present embodiment is very useful as a material of a solid electrolyte separator of various batteries, such as metal-air batteries (e.g., zinc-air batteries) and other zinc secondary batteries (e.g., nickel-zinc batteries).

The functional layer in the composite material of the present invention comprises a layered double hydroxide (LDH) represented by the general formula M²⁺₁₋ₓM³⁺ₓ(OH)₂Aⁿ⁻_{x/n}·mH₂O (where M²⁺ represents a divalent cation, M³⁺ represents a trivalent cation, Aⁿ⁻ represents an n-valent anion, n represents an integer not less than 1, x represents a value of 0.1 to 0.4, and m represents any real number). In addition, the functional layer exhibits water impermeability. In the general formula, M²⁺ may represent any divalent cation; preferably, M²⁺ represents, for example, Mg²⁺, Ca²⁺ and/or Zn²⁺, and more preferably Mg²⁺. M³⁺ may represent any trivalent cation; preferably, M³⁺ represents, for example, Al³⁺ and/or Cr^{3±}, and more preferably Al³⁺. Aⁿ⁻ may represent any anion, and preferably, for example, OH⁻and/or CO₃²⁻. Hence, it is preferable that, in the general formula, M²⁺ comprises Mg²⁺, M³⁺ comprises Al³⁺, and Aⁿ⁻ comprises OH⁻ and/or CO₃²⁻. In the general formula, n represents an integer not less than 1, and preferably 1 or 2; x represents a value of 0.1 to 0.4, and preferably 0.2 to 0.35; and m represents any real number.

The functional layer is formed on and/or in the porous substrate, and preferably on the porous substrate. In an embodiment as shown in Fig.1 where the functional layer 14 is formed on the porous substrate 12, the functional layer 14 is an LDH dense membrane. Typically, this LDH dense membrane consists of LDH. In an embodiment as shown in Fig. 2 where the functional layer 14' is formed in the porous substrate 12, high density LDH is formed in the porous substrate 12 (typically in pores in the surface and its vicinity of the porous substrate 12), whereby the functional layer 14' is composed of at least a portion of the porous substrate 12 and LDH. The composite material 10' and the functional layer 14' shown in Fig. 2 can be produced by removing the pure membrane portion of the functional layer 14 from the composite material 10 shown in Fig.1 by polishing, grinding or any other known method.

The functional layer exhibits water impermeability (desirably both water impermeability and gas impermeability). For example, the functional layer does not let water pass through the surface for a week during which this surface is in contact with the water at 25°C. In other words, the functional layer is composed of high density LDH and exhibits water impermeability. If local and/or incidental defects that exhibit water permeability are present in or on the functional layer, such defects may be filled with an adequate repairing material (e.g., an epoxy resin) to achieve water impermeability. Such a putty does not necessarily exhibit hydroxide ion conductivity. In each embodiment, the surface of the functional layer (typically the LDH dense membrane) has a porosity of preferably not more than 20%, more preferably not more than 15%, still more preferably not more than 10%, and most preferably not more than 7%. A lower porosity at the surface of the functional layer indicate a higher density of the functional layer (typically the LDH dense membrane), which is preferred. The high density functional layer as a hydroxide ion conductor is useful for, e.g., a functional membrane, such as a separator of a battery (e.g., a hydroxide ion conductive separator of a zinc-air battery). The surface porosity of the functional layer is adopted because it can readily be measured by image processing described below and substantially reflects the internal porosity of the functional layer. In other words, if the surface of the functional layer is dense, the inside of the functional layer is also dense. In the present embodiment, the porosity at the surface of the functional layer can be measured by a method involving image processing, in accordance with the following procedures: 1) an electron microscopic (SEM) image of the surface of the functional layer is taken at a magnification of not less than 10,000; 2) the grayscale SEM image is read with an image analysis software, such as Photoshop (Adobe); 3) a monochromatic binary image is generated with tools named [image], [color compensation] and [binarization] in this order; and 4) the porosity (%) is calculated by dividing the number of pixels of the black area(s) by the number of the pixels of the whole image. Preferably, the porosity is measured over a 6 µm × 6 µm area of the surface of the functional layer by image processing. More preferably, the porosity is determined by averaging the porosity in three 6 µm × 6 µm areas selected at random for objective evaluation.

The layered double hydroxide is composed of an agglomeration of platy particles (i.e., platy LDH particles). Preferably, these platy particles are oriented in such a manner that the tabular faces of the platy particles are substantially perpendicular to or oblique to the surface of the porous substrate (i.e., the substrate surface). This embodiment can be preferably attained especially when the functional layer 14 is formed as an LDH dense membrane on the porous substrate 12 to form the LDH-containing composite material 10 as shown in Fig. 1. This embodiment can also be attained when high density LDH is formed in the porous substrate 12 (typically, in pores in the surface and its vicinity of the porous substrate 12), whereby at least a portion of the porous substrate 12 constitutes the functional layer 14' as in the LDH composite material 10' shown in Fig. 2.

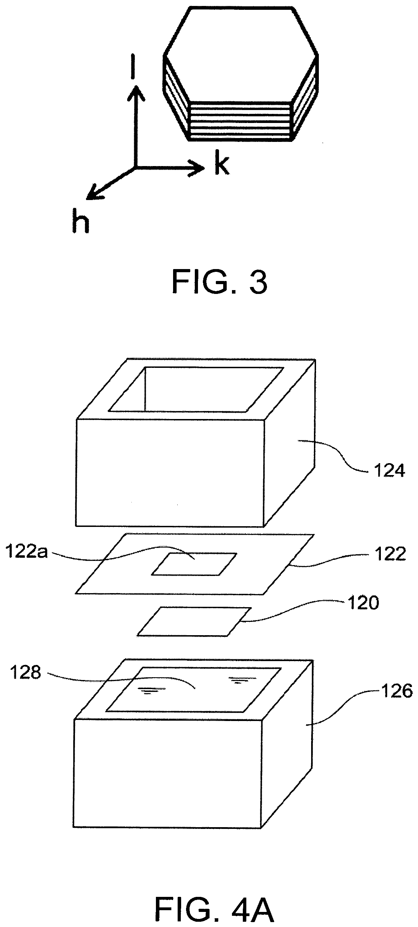

It is known that the LDH crystal has a form of a platy particle with a layered structure as shown in Fig. 3. The substantially perpendicular or oblique orientation described above is significantly beneficial for the LDH-containing functional layer (e.g., the LDH dense membrane), because an oriented LDH-containing functional layer (e.g., an oriented LDH dense membrane) exhibits anisotropic hydroxide ion conductivity, i.e., hydroxide ion conductivity along the orientation of the platy LDH particles (i.e., parallel to layers of LDH) is much greater than hydroxide ion conductivity perpendicular to the orientation of the platy LDH particles in the oriented-LDH-containing functional layer. In fact, the present inventors have revealed that, the hydroxide ion conductivity (S/cm) along the orientation of LDH particles in an oriented LDH bulk body is an order of magnitude greater than the hydroxide ion conductivity (S/cm) perpendicular to the orientation of LDH particles. Thus, the substantially perpendicular or oblique orientation in the LDH-containing functional layer of the present embodiment fully or significantly educes the anisotropic hydroxide ion conductivity of the oriented LDH to the thickness direction of the layer (i.e., the direction perpendicular to the surface of the functional layer or the surface of the porous substrate), whereby the conductivity along the thickness direction can be maximally or significantly increased. In addition, the LDH-containing functional layer of the present invention exhibits lower resistivity than an LDH bulk block by virtue of its layered shape. The LDH-containing functional layer with such an orientation readily conducts hydroxide ions along the thickness direction of the layer. Since the LDH-containing functional layer has high density, it is significantly appropriate for use in a functional layer that requires high conductivity across the thickness of the layer and high density, such as a separator of a battery (e.g., a hydroxide ion conductive separator of a zinc-air battery).

In a particularly preferred embodiment, the LDH-containing functional layer (typically the LDH dense membrane) should be composed of the platy LDH particles highly oriented in the substantially perpendicular direction. If the platy LDH particles are highly orientated in the substantially perpendicular direction, X-ray diffractometry of the surface of the functional layer shows no peak of (003) plane or a peak of (003) plane smaller than that of (012) plane (note that this shall not apply to the case where the porous substrate shows a peak at the same angle as a peak of (012) plane of the platy LDH particles, because a peak of (012) plane of the platy LDH particles cannot be distinguished). This characteristic peak profile indicates that the platy LDH particles of the functional layer are oriented substantially perpendicular to (i.e, perpendicular to or nearly perpendicular to, and preferably perpendicular to) the functional layer. The peak of (003) plane is strongest among peaks observed in X-ray diffractometry of non-oriented LDH powder. In contrast, the oriented LDH-containing functional layer shows no peak of (003) plane or a peak of (003) plane smaller than a peak of (012) plane because platy LDH particles are oriented substantially perpendicular to the functional layer. This can be explained as follows: The c planes (001) including the (003) plane (note that I is 3 or 6) are parallel to the layers of platy LDH particles. If the platy LDH particles are oriented substantially perpendicular to the functional layer, the layers of platy LDH particles are also perpendicular to the functional layer and thus the X-ray diffractometry of the surface of the functional layer shows no peak or hardly shows a peak of (001) plane. The peak of (003) plane is often stronger, if present, than the peak of (006) plane, and use of the peak of (003) plane can more readily confirm the substantially perpendicular orientation than use of the peak of (006) plane. Hence, the oriented LDH-containing functional layer preferably shows no or substantially no peak of (003) plane or shows a peak of (003) plane smaller than a peak of (012) plane, which indicates that the highly perpendicular orientation is achieved. In contrast, oriented LDH membranes of Patent Documents 1 and 2 and Non-Patent Document 1 each show a strong peak of (003) plane, which indicates that the substantially perpendicular orientation is not satisfactorily achieved. In addition, the membranes of these Documents are not dense.

The thickness of the functional layer is preferably not more than 100 µm, more preferably not more than 75 µm, still more preferably not more than 50 µm, further more preferably not more than 25 µm, and most preferably not more than 5 µm. The thin functional layers having such a thinness exhibits low resistivity. The functional layer is preferably formed on the porous substrate as the LDH dense membrane. In this case, the thickness of the functional layer is the thickness of the LDH dense membrane. In the case where the functional layer is formed in the porous substrate, the thickness of the functional layer is the thickness of a composite layer composed of at least a portion of the porous substrate and LDH. In the case where the functional layer is formed on and in the porous substrate, the thickness of the functional layer is the sum of the thickness of the LDH dense membrane and the thickness of the composite layer. In each embodiment, the thickness of the functional layer having the above thinness exhibits low resistivity desirable for use in, for example, a battery. The thickness of the oriented LDH-containing functional layer does not have a lower limit, which depends on its use. In order to ensure hardness desirable for use in a functional layer, such as a separator, the thickness is preferably not less than 1 µm, and more preferably not less than 2 µm.

### EXAMPLES

The present invention will be described in more detail by way of Examples below.

### Examples A1 to A6

Oriented layered double hydroxide membranes were formed on porous substrates in Examples described below. The membrane samples prepared in the Examples were evaluated as follows.

### Evaluation 1: Identification of Membrane Sample

A crystalline phase of a membrane sample is analyzed with an X-ray diffractometer (RINT-TTR III, manufactured by Rigaku Corporation) at a voltage of 50 kV, a current of 300 mA, and a measuring range of 10° to 70°. The resultant XRD profile is compared with the diffraction peaks of a layered double hydroxide (or a hydrotalcite compound) described in JCPDS card No. 35-0964 for identification of the membrane sample.

### Evaluation 2: Observation of Microstructure

The surface microstructure of the membrane sample was observed with a scanning electron microscope (SEM; JSM-6610LV, manufactured by JEOL Ltd.) at an acceleration voltage of 10 to 20 kV.

### Evaluation 3: Density Evaluation Test I

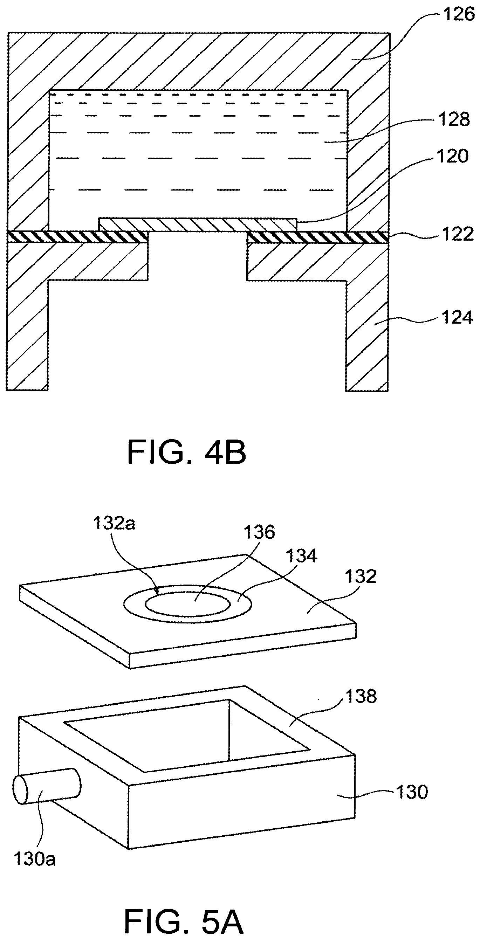

A density evaluation test was performed on the membrane sample for determining whether the sample has high density and thus water impermeability. With reference to Fig. 4A, a silicone rubber 122 having a central opening 122a (0.5 cm × 0.5 cm) was bonded to the membrane sample of LDH-containing composite material sample 120 (cut into a piece of 1 cm × 1 cm), and the resultant laminate was disposed between two acrylic units 124 and 126 and bonded to these acrylic units. The acrylic unit 124 disposed on the silicone rubber 122 has no bottom, and thus the silicone rubber 122 is bonded to the acrylic unit 124 such that the opening 122a is exposed. The acrylic unit 126 disposed on the porous substrate side in view of composite material sample 120 has a bottom and contains ion-exchange water 128. In this case, Al and/or Mg may be dissolved in the ion-exchange water. Thus, these components are arranged to form an assembly such that the ion-exchange water 128 comes into contact with the porous substrate of composite material sample 120 if the assembly is inverted upside down. It goes without saying that the unit 126 has a closed vent (not shown) and the vent is opened after inversion of the assembly. As illustrated in Fig. 4B, the assembly was inverted and left for one week at 25°C, and then the total weight thereof was measured again. Before measurement of the weight of the assembly, water droplets on the inner side(s) of the acrylic unit 124 were wiped off, if any. The density of the membrane sample was evaluated on the basis of the difference between the total weights of the assembly before and after the inversion. When no change in weight of the ion-exchange water is observed even after the one-week test at 25°C, the membrane sample (i.e., functional membrane) was evaluated as having high density so as to exhibit water impermeability.

### Evaluation 4: Density Evaluation Test II

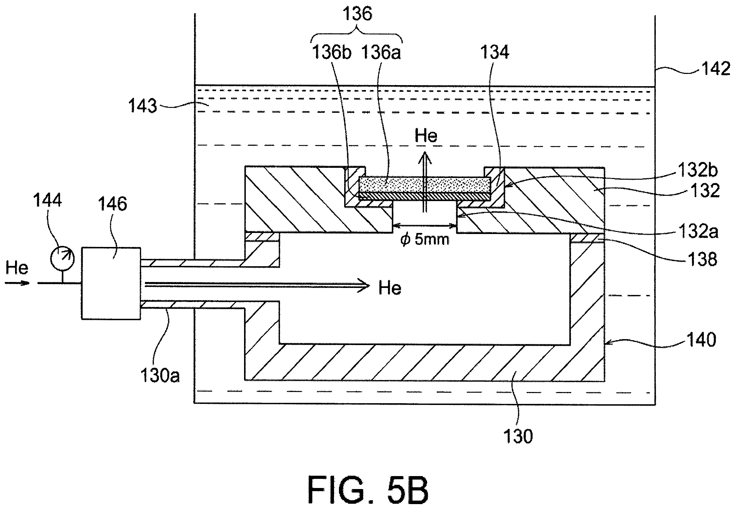

A density evaluation test was performed on the membrane sample for determining whether the sample has high density and thus gas impermeability. As illustrated in Figs. 5A and 5B, an acrylic container 130 and an alumina jig 132 were provided. The container 130 has no lid, and the jig 132 has a shape and a size such that it serves as a lid for the container 130. The acrylic container 130 has a gas inlet 130a for feeding a gas into the container 130. The alumina jig 132 has an opening 132a having a diameter of 5 mm, and a dent 132b provided around the opening 132a for supporting the membrane sample. An epoxy adhesive 134 was applied to the dent 132b of the alumina jig 132, and a membrane sample 136b of a composite material sample 136 was placed on the dent 132b and gas- and liquid-tightly bonded to the alumina jig 132. The alumina jig 132 provided with the composite material sample 136 was gas- and liquid-tightly bonded to the upper edge of the acrylic container 130 with a silicone adhesive 138 so as to completely cover the opening of the acrylic container 130, to prepare a hermetic container 140 for evaluation. The hermetic container 140 was placed in a water bath 142, and the gas inlet 130a of the acrylic container 130 was connected to a pressure gauge 144 and a flowmeter 146 so as to allow helium gas to be fed into the acrylic container 130. Water 143 was poured into the water bath 142 such that the hermetic container 140 was completely submerged in the water. The hermetic container 140 was ensured to have gas tightness and liquid tightness. The membrane sample 136b of the composite material sample 136 was exposed to the inner space of the hermetic container 140, and the porous substrate 136a of the composite material sample 136 was in contact with the water in the water bath 142. Helium gas was fed into the hermetic container 140 through the gas inlet 130a of the acrylic container 130. The pressure gauge 144 and the flowmeter 146 were monitored to achieve a differential pressure of 0.5 atm at the membrane sample 136b (i.e., the pressure applied to the surface in contact with helium gas was higher by 0.5 atm than water pressure applied to the opposite surface), to determine the presence of helium gas bubbles in the water caused by permeation of helium gas through the composite material sample 136. When no helium gas bubbles were observed, the membrane sample 136b was evaluated as having high density so as to exhibit gas impermeability.

### Example A1 (Comparative)

In Example A1 (Comparative Example), a layered double hydroxide dense membrane was formed without deposition of a material for starting crystal growth (i.e., without step (b)).

### (1) Preparation of Porous Substrate

8YSZ powder (zirconia powder) (TZ-8YS, Y₂O₃: 8 mol%, manufactured by Tosoh Corporation), methyl cellulose, and ion-exchange water were weighed in proportions by mass of 10:1:5, and were then kneaded together. The kneaded product was subjected to extrusion molding with a hand press into a size of 2.5 cm × 10 cm × 0.5 cm in thickness. The resultant green body was dried at 80°C for 12 hours and then fired at 1,100°C for three hours. The resultant product was processed into a zirconia porous substrate having dimensions of 2 cm by 2 cm by 0.3 cm.

The porosity at the surface of the resultant porous substrate was determined by a method involving image processing. The porosity was 50%. The porosity was determined as follows: 1) a scanning electron microscopic (SEM) image of the surface microstructure of the porous substrate was taken with a scanning electron microscope (SEM; JSM-6610LV, manufactured by JEOL Ltd.) (magnification: 10,000 or more) at an acceleration voltage of 10 to 20 kV; 2) the grayscale SEM image was read with image analysis software, such as Photoshop (manufactured by Adobe); 3) a monochromatic binary image was prepared with tools named [image], [color compensation], and [binarization] in this order; and 4) the porosity (%) was determined by dividing the number of pixels of the black areas by the number of all the pixels of the image. The porosity was determined over a 6 µm × 6 µm area of the surface of the porous substrate.

The average pore size of the porous substrate was about 0.2 µm. In the present invention, the average pore size was determined by measuring the largest length of each pore in a scanning electron microscopic (SEM) image of the surface of the porous substrate. The magnification of the scanning electron microscopic (SEM) image used in this measurement was 20,000. All the measured pore sizes were listed in order of size to calculate the average, from which the subsequent 15 larger sizes and the subsequent 15 smaller sizes, i.e., 30 sizes in total, were selected in one field of view. The selected sizes of two fields of view were then averaged to yield the average pore size. The pore sizes were measured by, for example, a length-measuring function of SEM software.

The resultant porous substrate was ultrasonically cleaned in acetone for five minutes, in ethanol for two minutes, and then in ion-exchange water for one minute.

### (2) Preparation of Aqueous Stock Solution

Magnesium nitrate hexahydrate (Mg(NO₃)₂·6H₂O, manufactured by KANTO CHEMICAL Co., Inc.), aluminum nitrate nonahydrate (Al(NO₃)₃·9H₂O, manufactured by KANTO CHEMICAL Co., Inc.), and urea ((NH₂)₂CO, manufactured by Sigma-Aldrich Corporation) were provided as raw materials for an aqueous stock solution. Magnesium nitrate hexahydrate and aluminum nitrate nonahydrate were weighed and placed in a beaker, and then ion-exchange water was added to the beaker to achieve a total volume of 75 mL, a ratio of the cations (Mg²⁺/Al³⁺) of 2, and a molar concentration of the total metal ions (i.e., Mg²⁺ and Al³⁺) of 0.320 mol/L. The resultant solution was agitated and urea was then added to the solution. The added urea was weighed in advance to give a urea/NO₃⁻ ratio of 4. The resultant solution was further agitated to prepare an aqueous stock solution.

### (3) Formation of Membrane by Hydrothermal Treatment

The aqueous stock solution prepared in the above procedure (2) and the porous substrate cleaned in the above procedure (1) were enclosed together in a hermetic Teflon (registered trademark) container (with an internal volume of 100 mL and a stainless steel jacket). The porous substrate was horizontally suspended and away from the bottom of the hermetic Teflon (registered trademark) container such that the opposite surfaces of the porous substrate came into contact with the aqueous stock solution. Thereafter, the porous substrate was subjected to hydrothermal treatment at a hydrothermal temperature of 70°C for 168 hours (7 days) to form oriented layered double hydroxide membranes (functional layers) on the surfaces of the substrate. After the elapse of a predetermined period of time, the porous substrate was removed from the hermetic container, cleaned with ion-exchange water, and then dried at 70°C for 10 hours, to form a dense membrane of the layered double hydroxide (LDH) on the porous substrate (hereinafter the dense membrane will be referred to as "membrane sample"). The thickness of the membrane sample was about 1.5 µm. A layered-double-hydroxide-containing composite material sample (hereinafter referred to as "composite material samples") was thereby prepared. LDH membranes were formed on the opposite surfaces of the porous substrate. In order to use the composite material as a separator, the LDH membrane on one surface of the porous substrate was mechanically removed.

### (4) Results of Evaluation

The resultant LDH membrane sample was evaluated. The results of evaluations 1 to 4 are described below.

Evaluation 1: The membrane sample was identified as an LDH (hydrotalcite compound) on the basis of the XRD profile.

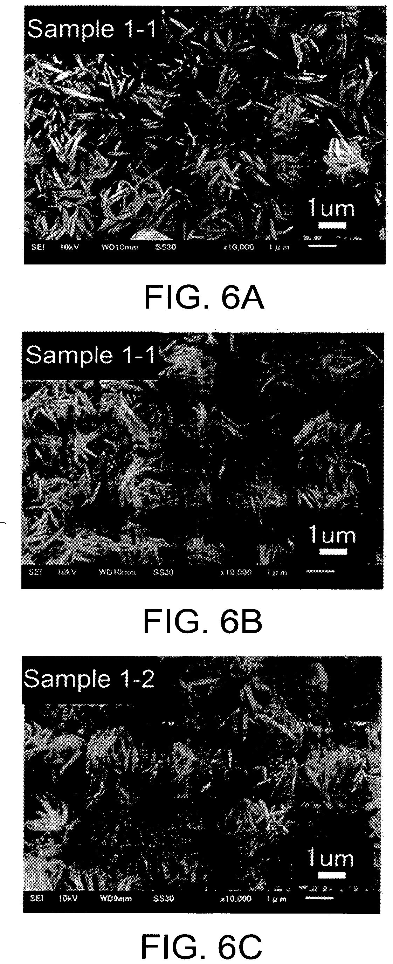

Evaluation 2: SEM images of surface microstructures of the membrane sample are illustrated in Figs. 6A to 6C. Figs. 6A and 6B are images of sample 1-1 observed in different visual fields, and Fig. 6C is an image of sample 1-2 prepared separately from sample 1-1 in the same manner as described above. As illustrated in Figs. 6A and 6B, sample 1-1 exhibits a variation in in-plane density. In detail, the membrane sample seems to be dense in the visual field illustrated in Fig. 6A. In contrast, gaps are observed in the membrane sample and the underlying porous substrate (in particular, small particles constituting the substrate) is exposed through the gaps in the visual field illustrated in Fig. 6B. In sample 1-2 illustrated in Fig. 6C, gaps are greater in number than those in sample 1-1, and small particles constituting the porous substrate are exposed through many gaps. Thus, samples 1-1 and 1-2 exhibit different densities. The images illustrated in Figs. 6A to 6C demonstrate that a single membrane sample prepared in Example A1 (without step (b) according to the present invention) exhibits a variation in in-plane density between different portions of the sample, and samples separately prepared in Example A1 exhibit different densities.

Evaluation 3: The membrane sample was determined to have water permeability (i.e., low density).

Evaluation 4: The membrane sample was determined to have gas permeability (i.e., low density).

### Example A2-1: Polystyrene Spin Coating and Sulfonation

An 8YSZ porous substrate was prepared and cleaned as in Example A1 (1). The surface of the porous substrate had a porosity of 50%, and the porous substrate had an average pore size of 0.2 µm. Separately, a polystyrene substrate was dissolved in xylene to prepare a coating solution. The coating solution was applied (added dropwise) to the porous substrate by a spin coating process at 8,000 rpm for 200 seconds (including dropwise addition and drying). The spin-coated porous substrate was sulfonated through immersion in 95% sulfuric acid at 25°C for four days. The sulfonated porous substrate was placed in an autoclave and an LDH membrane was formed as in Example A1 (2) and (3).

The resultant LDH membrane sample was evaluated. The results of evaluations 1 to 4 are described below.

Evaluation 1: The membrane sample was identified as an LDH (hydrotalcite compound) on the basis of the XRD profile.

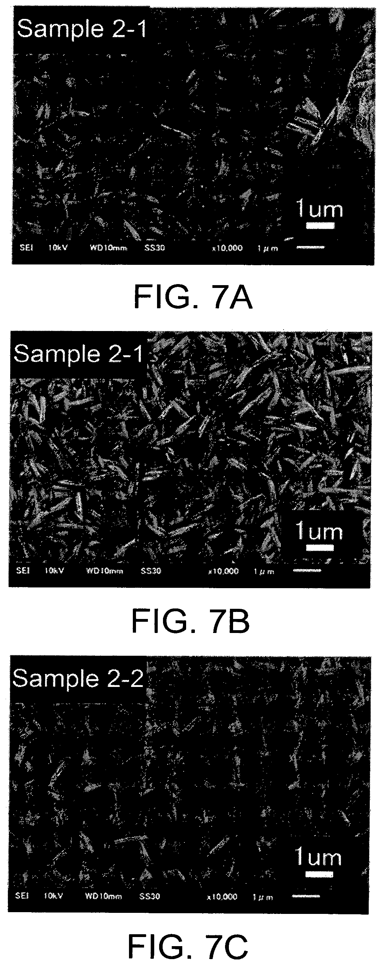

Evaluation 2: SEM images of surface microstructures of the membrane sample are illustrated in Figs. 7A to 7C. Figs. 7A and 7B are images of sample 2-1 observed in different visual fields, and Fig. 7C is an image of sample 2-2 prepared separately from sample 2-1 in the same manner as described above. As illustrated in Figs. 7A and 7B, sample 2-1 exhibits no variation in in-plane density. No difference in density is observed between sample 2-2 illustrated in Fig. 7C and sample 2-1. The images illustrated in Figs. 7A to 7C demonstrate that a single membrane sample prepared in Example A2 (through step (b) according to the present invention) exhibits no variation in in-plane density between different portions of the sample, and samples separately prepared in Example A2 exhibit no difference in density. Thus, uniform LDH dense membranes were formed at high reproducibility.

Evaluation 3: The membrane sample was determined to have sufficiently high density to exhibit water impermeability.

Evaluation 4: The membrane sample was determined to have sufficiently high density to exhibit gas impermeability.

### Example A2-2: Carbon Coating (Vapor Deposition) and Sulfonation

### (1) Preparation of Porous Substrate

8YSZ powder (zirconia powder) (TZ-8YS, Y₂O₃: 8 mol%, manufactured by Tosoh Corporation), methyl cellulose, and deionized water were weighed in proportions by mass of 10:1:5, and were then kneaded together. The kneaded product was subjected to extrusion molding with a hand press into dimensions of 2.5 cm by 10 cm by 0.5 cm (thickness). The resultant green product was dried at 80°C for 12 hours and then fired at 1,100°C for three hours to prepare a zirconia porous substrate. The porous substrate was ultrasonically cleaned in acetone for five minutes, in ethanol for two minutes, and then in deionized water for one minute. The surface of the porous substrate had a porosity of 50%, and the porous substrate had an average pore size of 0.2 µm.

### (2) Carbon Coating (Vapor Deposition)

The 8YSZ porous substrate was evenly coated (vapor-deposited) with carbon while the substrate was rotated. The carbon coating was performed by a flash deposition process (five flash operations) with a vacuum deposition apparatus (SVC-700TMSG, manufactured by Sanyu Electron Co., Ltd., optionally equipped with a flash power supply for carbon vapor deposition). The carbon-coated substrate was immersed in 95% sulfuric acid at 80°C for seven days to bond sulfone groups to the carbon.

### (3) Preparation of Aqueous Stock Solution

Magnesium nitrate hexahydrate (Mg(NO₃)₂·6H₂O, manufactured by KANTO CHEMICAL Co., Inc.), aluminum nitrate nonahydrate (Al(NO₃)₃·9H₂O, manufactured by KANTO CHEMICAL Co., Inc.), and urea ((NH₂)₂CO, manufactured by Sigma-Aldrich Corporation) were provided as raw materials for an aqueous stock solution. Magnesium nitrate hexahydrate and aluminum nitrate nonahydrate were weighed and placed in a beaker, and then deionized water was added to the beaker to achieve a total volume of 75 mL, a ratio of the cations (Mg²⁺/Al³⁺) of 2, and a molar concentration of the total metal ions (i.e., Mg²⁺ and Al³⁺) of 0.320 mol/L. The resultant solution was agitated and urea was then added to the solution. The added urea was weighed in advance to give a urea/NO₃⁻ ratio of 4. The resultant solution was further agitated to prepare an aqueous stock solution.

### (4) Formation of Membrane by Hydrothermal Treatment

The aqueous stock solution prepared in the above procedure (3) and the porous substrate cleaned in the above procedure (1) were placed together in a hermetic Teflon (registered trademark) container (autoclave, internal volume: 100 mL, equipped with a stainless steel jacket). The porous substrate was horizontally suspended and away from the bottom of the hermetic Teflon (registered trademark) container such that both surfaces of the porous substrate came into contact with the aqueous stock solution. The porous substrate was then hydrothermally treated at a temperature of 70°C for 168 hours (7 days), to form oriented layered double hydroxide membranes (functional layers) on the surfaces of the substrate. After the elapse of a predetermined period of time, the porous substrate was removed from the hermetic container, cleaned with deionized water, and then dried at 70°C for seven hours, to form a dense membrane of the layered double hydroxide (LDH) on the porous substrate (hereinafter the dense membrane will be referred to as "membrane sample"). The membrane sample had a thickness of about 1.5 µm. A layered-double-hydroxide-containing composite material sample (hereinafter referred to as "composite material sample") was thereby prepared. LDH membranes were formed on both surfaces of the porous substrate. In order to use the composite material as a separator, the LDH membrane on one surface of the porous substrate was mechanically removed.

The resultant LDH membrane sample was evaluated. The results of evaluations 1 to 4 are described below.

Evaluation 1: The membrane sample was identified as an LDH (hydrotalcite compound) on the basis of the XRD profile.

Evaluation 2: A single membrane sample exhibited no variation in in-plane density between different portions of the sample, and separately prepared samples exhibit no difference in density. Thus, uniform LDH dense membranes were formed at high reproducibility.

Evaluation 3: The membrane sample was determined to have sufficiently high density to exhibit water impermeability.

Evaluation 4: The membrane sample was determined to have sufficiently high density to exhibit gas impermeability.

### Example A2-3: Carbon Coating (Resin Application and Carbonization) and Sulfonation

An 8YSZ porous substrate was prepared and cleaned as in Example A2-2 (1). The surface of the porous substrate had a porosity of 50%, and the porous substrate had an average pore size of 0.2 µm. A varnish (polyimide-containing solution) was applied (added dropwise) to the 8YSZ porous substrate by a spin coating process at 8,000 rpm for 200 seconds (including dropwise addition and drying). The varnish-coated substrate was thermally treated in air at 300°C for five hours to thermally cure the precursor into a polyimide. The substrate was thermally treated in a vacuum furnace at 600°C for five hours to carbonize the polyimide. The carbon-coated substrate was immersed in 95% sulfuric acid at 80°C for four days to bond sulfone groups to the carbon. The sulfonated porous substrate was placed in an autoclave and an LDH membrane was formed as in Example A2-2 (3) and (4).

The resultant LDH membrane sample was evaluated. The results of evaluations 1 to 4 are described below.

Evaluation 1: The membrane sample was identified as an LDH (hydrotalcite compound) on the basis of the XRD profile.

Evaluation 2: A single membrane sample exhibited no variation in in-plane density between different portions of the sample, and separately prepared samples exhibit no difference in density. Thus, uniform LDH dense membranes were formed at high reproducibility.

Evaluation 3: The membrane sample was determined to have sufficiently high density to exhibit water impermeability.

Evaluation 4: The membrane sample was determined to have sufficiently high density to exhibit gas impermeability.

### Example A3: Treatment with Surfactant

A 3YSZ porous substrate was prepared and cleaned as in Example A1 (1), except that 8YSZ powder (zirconia powder) was replaced with 3YSZ powder (TZ-3YS, Y₂O₃: 3 mol%, manufactured by Tosoh Corporation). The surface of the porous substrate had a porosity of 45%, and the porous substrate had an average pore size of 0.3 µm. The porous substrate was immersed in a solution containing a surfactant (sodium naphthalenesulfonate-formalin condensate (hydrophilic group: sulfonic group)) at 40°C for one day with agitation at 500 rpm and then rinsed off with deionized water. The surfactant-treated porous substrate was placed in an autoclave and an LDH membrane was formed as in Example A1 (2) and (3).

The resultant LDH membrane sample was evaluated. The results of evaluations 1 to 4 are described below.

Evaluation 1: The membrane sample was identified as an LDH (hydrotalcite compound) on the basis of the XRD profile.

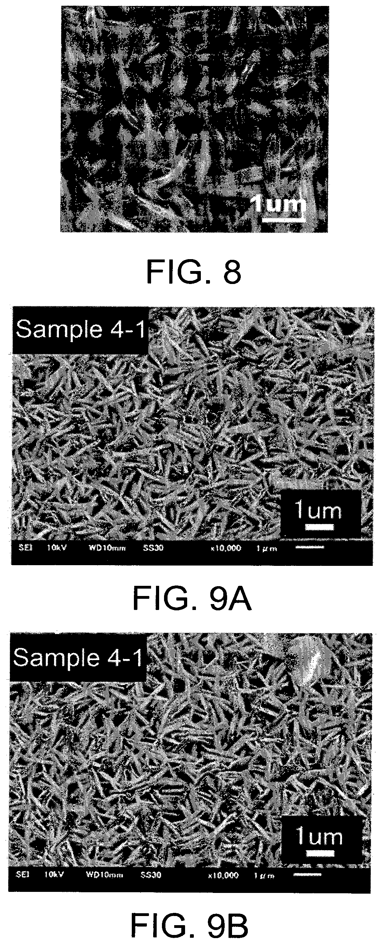

Evaluation 2: A SEM image of a surface microstructure of the membrane sample is illustrated in Fig. 8. As illustrated in Fig. 8, the membrane sample exhibits no variation in in-plane density. The results demonstrate that the membrane sample prepared in Example A3 (through step (b) according to the present invention) exhibits no variation in in-plane density. Thus, the LDH dense membrane was evenly formed.

Evaluation 3: The membrane sample was determined to have sufficiently high density to exhibit water impermeability.

Evaluation 4: The membrane sample was determined to have sufficiently high density to exhibit gas impermeability.

### Example A4: Boehmite Sol Spin Coating

An 8YSZ porous substrate was prepared and cleaned as in Example A1 (1). The surface of the porous substrate had a porosity of 50%, and the porous substrate had an average pore size of 0.2 µm. A boehmite sol (trade name: F-1000, manufactured by Kawaken Fine Chemicals Co., Ltd.) was applied (added dropwise) to the 8YSZ porous substrate by a spin coating process at 8,000 rpm for 200 seconds (including dropwise addition and drying). The boehmite sol-coated porous substrate was placed in an autoclave and an LDH membrane was formed as in Example A1 (2) and (3).

The resultant LDH membrane sample was evaluated. The results of evaluations 1 to 4 are described below.

Evaluation 1: The membrane sample was identified as an LDH (hydrotalcite compound) on the basis of the XRD profile.

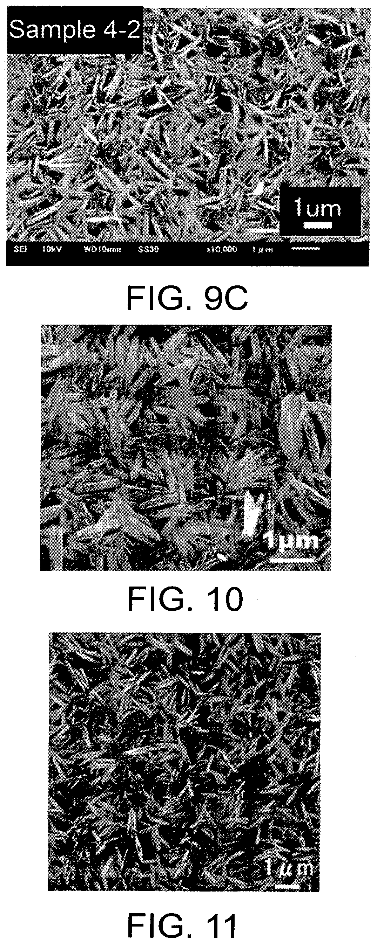

Evaluation 2: SEM images of surface microstructures of the membrane sample are illustrated in Figs. 9A to 9C. Figs. 9A and 9B are images of sample 4-1 observed in different visual fields, and Fig. 9C is an image of sample 4-2 prepared separately from sample 4-1 in the same manner as described above. As illustrated in Figs. 9A and 9B, sample 4-1 exhibits no variation in in-plane density. No difference in density is observed between sample 4-2 illustrated in Fig. 9C and sample 4-1. The images illustrated in Figs. 9A to 9C demonstrate that a single membrane sample prepared in Example A4 (through step (b) according to the present invention) exhibits no variation in in-plane density between different portions of the sample, and samples separately prepared in Example A4 exhibit no difference in density. Thus, uniform LDH dense membranes were formed at high reproducibility.

Evaluation 3: The membrane sample was determined to have sufficiently high density to exhibit water impermeability.

Evaluation 4: The membrane sample was determined to have sufficiently high density to exhibit gas impermeability.

### Example A5: Hydrothermal Nucleation of Al(OH)₃

An 8YSZ porous substrate was prepared and cleaned as in Example A1 (1). The surface of the porous substrate had a porosity of 50%, and the porous substrate had an average pore size of 0.2 µm. The 8YSZ porous substrate was placed in an autoclave. An LDH membrane was formed as in Example A1 (2) and (3), except that the seven-day hydrothermal treatment at 70°C was preceded by formation of Al(OH)₃ on the surface of the substrate through hydrothermal treatment at 60°C for four days in the same aqueous stock solution. In detail, Al(OH)₃ was formed on the surface of the porous substrate through hydrothermal treatment in the autoclave containing the aqueous stock solution and the porous substrate at 60°C for four days, followed by hydrothermal treatment in the same aqueous stock solution at 70°C for seven days, to form an LDH membrane. The aqueous stock solution exhibited a pH of 5.8 to 7.0 during the hydrothermal treatment at 60°C and a pH of higher than 7.0 during the hydrothermal treatment at 70°C.

The resultant LDH membrane sample was evaluated. The results of evaluations 1 to 4 are described below.

Evaluation 1: The membrane sample was identified as an LDH (hydrotalcite compound) on the basis of the XRD profile.

Evaluation 2: A SEM image of a surface microstructure of the membrane sample is illustrated in Fig. 10. As illustrated in Fig. 10, the membrane sample exhibits no variation in in-plane density. The results demonstrate that the membrane sample prepared in Example A5 (through step (b) according to the present invention) exhibits no variation in in-plane density. Thus, the LDH dense membrane was evenly formed.

Evaluation 3: The membrane sample was determined to have sufficiently high density to exhibit water impermeability.

Evaluation 4: The membrane sample was determined to have sufficiently high density to exhibit gas impermeability.

In Example A5, the formation of Al(OH)₃ at 60°C and the formation of the LDH membrane at 70°C were performed in the same autoclave. The formation of Al(OH)₃ at 60°C may be followed by the formation of the LDH membrane in an autoclave different from that used for the Al(OH)₃ formation. Alternatively, Al(OH)₃ may be formed through hydrothermal treatment in a solution containing aluminum nitrate and urea and not containing magnesium nitrate.

### Example A6: Formation of LDH Membrane through Hydrothermal Treatment after Al Vapor Deposition

### (1) Preparation of Porous Substrate

An 8YSZ porous substrate was prepared and cleaned as in Example A1 (1). The surface of the porous substrate had a porosity of 50%, and the porous substrate had an average pore size of 0.2 µm. Al was then vapor-deposited on the 8YSZ porous substrate as described below, followed by formation of an LDH membrane.

### (2) Al Vapor Deposition on Substrate

Aluminum (commercially available product, purity: 99.999%) and the porous substrate were placed on a predetermined jig in a vacuum deposition apparatus. Al was then deposited on one surface of the porous substrate.

### (3) Preparation of Stock Solution for Pretreatment

Magnesium nitrate hexahydrate (Mg(NO₃)₂·6H₂O, manufactured by KANTO CHEMICAL Co., Inc.) and urea ((NH₂)₂CO, manufactured by Sigma-Aldrich Corporation) were provided as raw materials for an aqueous stock solution. Magnesium nitrate hexahydrate and urea were weighed and placed in a beaker, and then deionized water was added to the beaker to achieve a total volume of 40 mL, a molar concentration of the metal ion (Mg²⁺) of 0.188 mol/L, and a urea concentration of 0.75 mol/L. The resultant solution was agitated to prepare an aqueous stock solution.

### (4) Hydrothermal Pretreatment

The aqueous stock solution prepared in the above procedure (2) and the porous substrate cleaned in the above procedure (1) were placed together in a hermetic Teflon (registered trademark) container (internal volume: 100 mL, equipped with a stainless steel jacket). The porous substrate was horizontally suspended and away from the bottom of the hermetic Teflon (registered trademark) container such that both surfaces of the substrate came into contact with the solution. The substrate was then hydrothermally treated at a temperature of 90°C for three hours. After the elapse of a predetermined period of time, the substrate was removed from the hermetic container and cleaned with deionized water. The substrate was placed in a hermetic Teflon (registered trademark) container containing a solution for formation of a membrane.

### (5) Preparation of Aqueous Stock Solution (for Formation of Membrane)

Magnesium nitrate hexahydrate (Mg(NO₃)₂·6H₂O, manufactured by KANTO CHEMICAL Co., Inc.), aluminum nitrate nonahydrate (Al(NO₃)₃·9H₂O, manufactured by KANTO CHEMICAL Co., Inc.), and urea ((NH₂)₂CO, manufactured by Sigma-Aldrich Corporation) were provided as raw materials for an aqueous stock solution. Magnesium nitrate hexahydrate and aluminum nitrate nonahydrate were weighed and placed in a beaker, and then deionized water was added to the beaker to achieve a total volume of 75 mL, a ratio of the cations (Mg²⁺/Al³⁺) of 2, and a molar concentration of the total metal ions (i.e., Mg²⁺ and Al³⁺) of 0.280 mol/L. The resultant solution was agitated and urea was then added to the solution. The added urea was weighed in advance to give a urea/NO₃⁻ ratio of 4. The resultant solution was further agitated to prepare an aqueous stock solution.

### (6) Formation of Membrane by Hydrothermal Treatment

The aqueous stock solution prepared in the above procedure (5) and the porous substrate prepared and cleaned in the above procedure (1) were placed together in a hermetic Teflon (registered trademark) container (internal volume: 100 mL, equipped with a stainless steel jacket). The porous substrate was horizontally suspended and away from the bottom of the hermetic Teflon (registered trademark) container such that both surfaces of the porous substrate came into contact with the aqueous stock solution. The porous substrate was then hydrothermally treated at a temperature of 70°C for 168 hours (7 days), to form oriented layered double hydroxide membranes (functional layers) on the surfaces of the substrate. After the elapse of a predetermined period of time, the porous substrate was removed from the hermetic container, cleaned with deionized water, and then dried at 70°C for 10 hours, to form a dense membrane of the layered double hydroxide (LDH) on the porous substrate (hereinafter the dense membrane will be referred to as "membrane sample"). The membrane sample had a thickness of about 1.5 µm. A layered-double-hydroxide-containing composite material sample was thereby prepared. LDH membranes were formed on the both surfaces of the porous substrate. In order to use the composite material as a separator, the LDH membrane on one surface of the porous substrate was mechanically removed.

The resultant LDH membrane sample was evaluated. The results of evaluations 1 to 4 are described below.

Evaluation 1: The membrane sample was identified as an LDH (hydrotalcite compound) on the basis of the XRD profile.

Evaluation 2: A SEM image of a surface microstructure of the membrane sample is illustrated in Fig. 11. As illustrated in Fig. 11, the membrane sample exhibits no variation in in-plane density. The results demonstrate that the membrane sample prepared in Example A6 (through step (b) according to the present invention) exhibits no variation in in-plane density. Thus, the LDH dense membrane was evenly formed.

Evaluation 3: The membrane sample was determined to have sufficiently high density to exhibit water impermeability.

Evaluation 4: The membrane sample was determined to have sufficiently high density to exhibit gas impermeability.

### Example A7: Manganese Coating

An 8YSZ porous substrate was prepared and cleaned as in Example A2-2 (1). The surface of the porous substrate had a porosity of 50%, and the porous substrate had an average pore size of 0.2 µm. Separately, deionized water was added to manganese nitrate hexahydrate to prepare a 75 wt% aqueous manganese nitrate solution. The aqueous manganese nitrate solution was applied to the 8YSZ porous substrate by a spin coating process at 8,000 rpm for 10 seconds. The solution-coated substrate was placed on a hot plate at 200°C to thermally decompose manganese nitrate into manganese oxide. The resultant manganese oxide has an amorphous form as determined by XRD analysis. In general, amorphous manganese oxide prepared through oxidative decomposition of manganese nitrate at low temperature as described above has an oxidation number of about 4. The manganese-oxide-coated porous substrate was placed in an autoclave and an LDH membrane was formed as in Example A2-2 (3) and (4).

The resultant LDH membrane sample was evaluated. The results of evaluations 1 to 4 are described below.

Evaluation 1: The membrane sample was identified as an LDH (hydrotalcite compound) on the basis of the XRD profile.

Evaluation 2: A single membrane sample exhibited no variation in in-plane density between different portions of the sample, and separately prepared samples exhibit no difference in density. Thus, uniform LDH dense membranes were formed at high reproducibility. Evaluation 3: The membrane sample was determined to have sufficiently high density to exhibit water impermeability.

Evaluation 4: The membrane sample was determined to have sufficiently high density to exhibit gas impermeability.

### Examples B1 to B4 (Reference Examples)

The following Examples are preparation of oriented layered-double-hydroxide-containing membranes on non-porous substrates. These examples do not fall into the present invention but are regarded as reference examples, and a non-porous substrate of the following reference example can be replaced with a desired porous substrate to produce a layered-double-hydroxide-containing composite material of the present invention.

### Example B1 (Reference): Preparation of Oriented Layered-Double-Hydroxide-Containing Membrane

### (1) Sulfonation of Substrate

Polystyrene plates having a size of 26.5 mm × 30.0 mm × 1.85 mm were prepared as aromatic polymer substrates having sulfonatable surfaces. The surfaces of the polystyrene plates were cleaned by wiping with ethanol. The cleaned polystyrene plates were then soaked in a commercially-available concentrated sulfuric acid (conc. not less than 95.0% by weight, KANTO CHEMICAL Co., Inc.) in a sealed container at room temperature. After the soaking times shown in Table 1, the polystyrene plates were taken from the concentrated sulfuric acid, and then cleaned with ion-exchanged water. The cleaned polystyrene plates were dried at 40°C for 6 hours. In this way the polystyrene plates having sulfonated surfaces were prepared as substrates for samples 1 to 17. In addition, a polystyrene plate without sulfonated surfaces was prepared as a substrate for comparative sample 18.

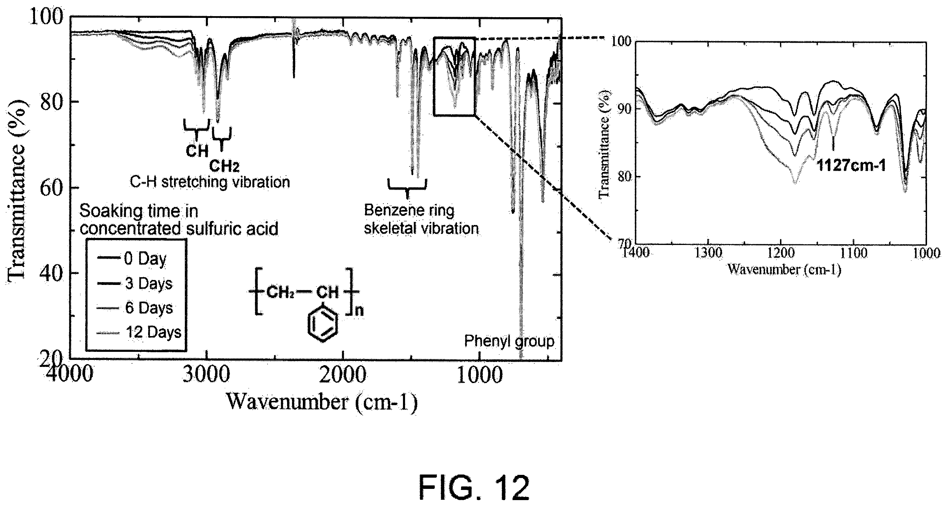

Before and after the sulfonation, transmission spectra of the polystyrene plate were obtained by attenuated total reflection (ATR) of Fourier transform infrared spectroscopy (FT-IR) to detect an absorption peak assigned to the sulfonate group. In this measurement, transmission spectrum at a measuring range of 4000 to 400 cm⁻¹ was obtained for 64 times in total with a horizontal ATR device of an FT-IR device for each sample and background. The transmission spectrum of the polystyrene plates which were prepared by different soaking times are shown in Fig. 12. Fig. 12 demonstrates that the sulfonated polystyrene plates have an absorption peak at 1127 cm⁻¹ assigned to the sulfonate group, which does not appear in the non-sulfonated polystyrene plate, and this peak becomes stronger as the soaking time increases. On the ground that the measured areas are all the same, it is considered that a longer soaking time in concentrated sulfuric acid leads to a higher amount (i.e., density) of the sulfonate group. In addition, the ratio of transmittance peaks (i.e., T₁₆₀₁/T₁₁₂₇), that is, the ratio of the peak transmittance at 1601 cm⁻¹ (i.e., T₁₆₀₁) assigned to C=C stretching vibration of the phenyl group (in a benzene ring skeleton), which does not change by sulfonation, to the peak transmittance at 1127 cm⁻¹ (i.e., T₁₁₂₇) assigned to the sulfonate group was calculated from the transmission spectrum obtained by the ATR method. The calculated ratios are shown in Table 1, and demonstrate that the longer soaking time leads to an increase in the content of the sulfonate group.
[Table 1]

**Table 1**

| Soaking time in conc. sulfuric acid (day) | Peak transmittance at 1601 cm⁻¹ assigned to C=C stretching vibration of phenyl group T₁₆₀₁(%) | Peak transmittance at 1127 cm⁻¹ assigned to the sulfonate group T₁₁₂₇(%) | Peak ratio T₁₆₀₁/T₁₁₂₇ |
|---|---|---|---|
| 0 | 81.585 | 94.206 | 0.866 |
| 3 | 80.154 | 89.660 | 0.894 |
| 6 | 81.439 | 88.457 | 0.921 |
| 12 | 79.844 | 84.845 | 0.941 |

### (2) Preparation of Aqueous Stock Solution

Magnesium nitrate hexahydrate (Mg(NO₃)₂·6H₂O, KANTO CHEMICAL Co., Inc.), aluminum nitrate nonahydrate (Al(NO₃)₃·9H₂O, KANTO CHEMICAL Co., Inc.), and urea ((NH₂)₂CO, Sigma-Aldrich Corporation) were prepared as raw materials for aqueous stock solutions. Magnesium nitrate hexahydrate and aluminum nitrate nonahydrate were weighed and put in a beaker, and then ion-exchanged water was added to the beaker to give a total volume of 75 ml, ratios of the cations (Mg²⁺/Al³⁺) shown in Table 2 and molar concentrations of the total metal ions (i.e., Mg²⁺ and Al³⁺) shown in Table 2. The resulting solutions were stirred, and then urea was added to the solutions. The added urea was weighed in advance to give ratios shown in Table 2. The resulting solutions were stirred again. In this way aqueous stock solutions were prepared.

### (3) Formation of Membrane by Hydrothermal Treatment

Each stock solution prepared in procedure (2) and each sulfonated substrate prepared in procedure (1) were enclosed together in a sealed Teflon (registered trademark) container (with an internal volume of 100 mL and a stainless steel jacket). The substrate was spontaneously suspended in a horizontal posture in the stock solution. In the next stage, hydrothermal treatment was performed under conditions of a hydrothermal temperature, a hydrothermal time and a heating rate shown in Table 2 to form oriented layered double hydroxide membranes on the substrate. After a predetermined time, the substrate was taken from the sealed container. The substrate was then cleaned with ion-exchanged water and dried at 70°C for 10 hours to form membranes of the layered double hydroxide (or LDH). In this way samples 1 to 18 were prepared. Samples 1 to 17 were in a shape of membrane, and each had a thickness of about 2 µm. In contrast, sample 18 did not have a shape of membrane.

### Example B2 (Reference): Evaluation of Orientation

Crystalline phases of samples 1 to 18 were analyzed with an X-ray diffractometer (D8 ADVANCE, Bruker AXS) at a voltage of 40 kV, a current of 40 mA and a measuring range of 5° to 70°. The resulting XRD profiles were compared with the diffraction peaks of a layered double hydroxide (or a hydrotalcite compound) described in JCPDS card No. 35-0964, and samples 1 to 17 were identified as a layered double hydroxide (or a hydrotalcite compound).

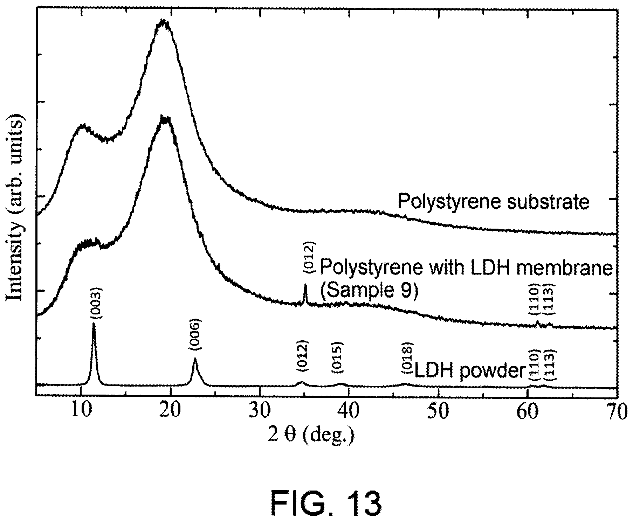

In the next stage, the degree of crystallographic orientation of each LDH membrane was investigated using the XRD profile. For a simple explanation, the XRD profile of the crystalline phase of sample 9, which had the highest membrane density, is shown in Fig. 13. In Fig. 13, the profile at the top is assigned to the crystalline phase of the polystyrene substrate, the phase in the middle is assigned to the crystalline phase of the polystyrene substrate having the LDH membranes, and the phase at the bottom is assigned to the crystalline phase of the LDH powder. The LDH powder exhibited a strongest peak of (003) plane, whereas the oriented LDH membrane exhibited weaker peaks of (001) planes (I is 3 and 6) and exhibited peaks of (012) and (110) planes. This result demonstrates that loss of peaks of (001) planes indicates the platy particles are orientated substantially perpendicular to (i.e., perpendicular to or nearly perpendicular to) the substrate.

The crystallographic orientations of samples 1 to 8 and 10 to 18 were also investigated as in sample 9. The crystallographic orientations were rated on a scale of A to C. The results are shown in Table 2.

### <Evaluation Criteria of Crystalline Orientation>

A: no peak of (003) plane was observed or the intensity of a peak of (003) plane was not more than 50% of that of a peak of (012) plane;
B: the intensity of a peak of (003) plane ranged from 50% to 100% of that of a peak of (012) plane;
C: the intensity of a peak of (003) plane was stronger than that of a peak of (012) plane.

### Example B3 (Reference): Observation of Microstructure

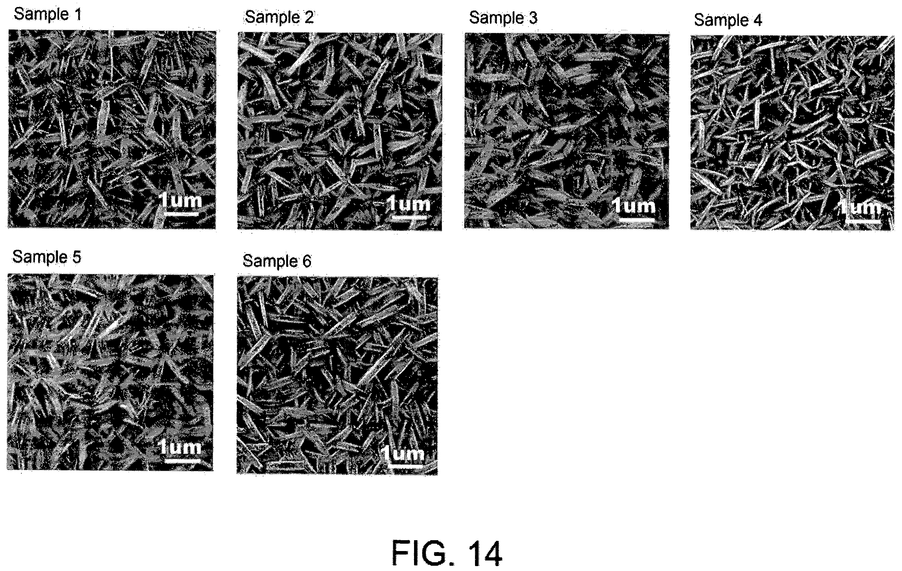

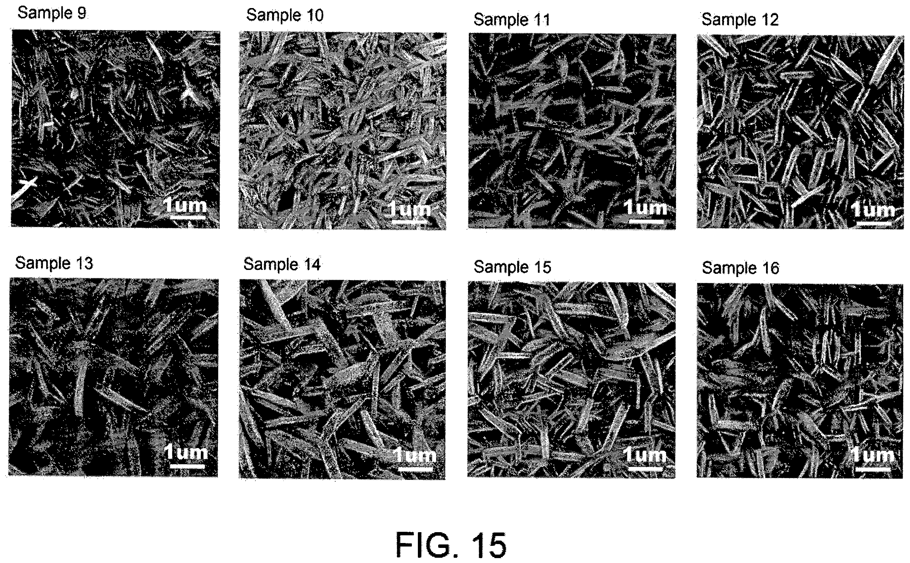

The surface microstructures of samples 1 to 6, 9 to 16 and 18 were observed with a scanning electron microscope (SEM; JSM-6610LV, JEOL Ltd.) at an acceleration voltage of 10 to 20 kV. The resulting SEM images (i.e., secondary electron images) of the surface microstructures of samples 1 to 6, 9 to 16 and 18 are shown in Figs. 14 to 16. These images demonstrates that sample 9 has the smallest voids (i.e., the highest density). In contrast, sample 18 did not have a shape of membrane.

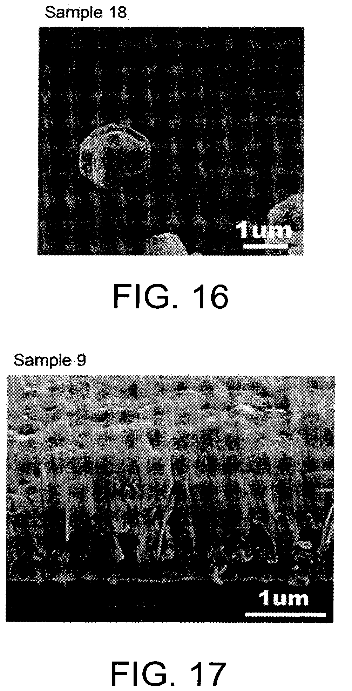

The microstructure of a cross-section of sample 9 was observed by the following procedures. The microstructure at a fractured cross-sectional surface of sample 9 (hereinafter referred to as a fracture surface) was observed with a scanning electron microscope (SEM; JSM-6610LV, JEOL Ltd.) at an acceleration voltage of 10 to 20 kV. The resulting SEM image of the microstructure at the fracture surface of sample 9 is shown in Fig. 17.

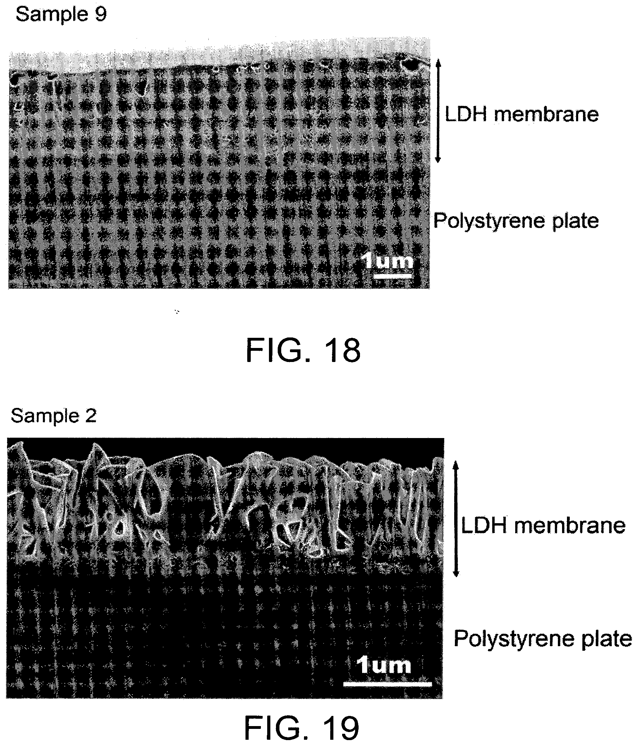

Subsequently, the fracture surface of sample 9 was polished by FIB or cryomilling to form a polished cross-section. The microstructure of this polished cross-section was then observed with a field emission scanning electron microscope (FE-SEM) at an acceleration voltage of 1.5 to 3 kV. The resulting SEM image of the microstructure at the polished cross-section of sample 9 is shown in Fig. 18. The microstructure at a polished cross-section of sample 2 was observed as in sample 9, and the resulting SEM image is shown in Fig. 19.

### Example B4 (Reference): Measurement of Porosity and Membrane Density

The porosity at the surfaces of samples 1 to 6, 9 to 16 and 18 was measured by a method involving image processing. The porosity was measured by the following procedures: 1) electron microscopic images of the surfaces of the membranes were taken at a magnification of not less than 10,000 as in Example B3; 2) the grayscale SEM images were read with an image analysis software, such as Photoshop (Adobe); 3) monochromatic binary images were generated with tools named [image], [color compensation] and [binarization] in this order; and 4) the porosity (%) was calculated by dividing the number of pixels of the black areas by the number of the pixels of the whole image. The porosity was measured over a 6 µm × 6 µm area of the surfaces of the membranes.

The density D of the surface of the membrane (or a membrane surface density) was calculated by the equation D = 100% - (the porosity at the surface of the membrane). Results of the calculation are shown in Table 2. The density of the membranes was rated on a scale of A to D based on the calculated density at the surfaces of the membranes.

### <Evaluation Criteria of Density>

A: membrane surface density ≥ 90%;
B: 90% > membrane surface density ≥ 80%;
C: 80% > membrane surface density ≥ 50%;
D: 50% > membrane surface density.

The porosity at polished cross-sections of samples 2 and 9 was also measured. The porosity at the polished cross-sections was measured as in the above measurement of the porosity at the membrane surfaces except for taking electron microscopic images (i.e., SEM images) of the polished cross-sections at a magnification of not less than 10,000 as in Example B3. The porosity was measured over a 2 µm × 4 µm area of the polished cross-sections of these oriented membrane. The porosity at the polished cross-section of sample 9 was 4.8% on average (i.e., the porosity at the two polished cross-sections was averaged). The result demonstrates formation of high density membranes. The porosity at the polished surface of sample 2 having a density lower than sample 9 was 22.9% on average (i.e., the porosity at the two polished cross-sections was averaged). Table 2 demonstrates that the porosity at the surface basically corresponds to the porosity at the cross-section. The results demonstrate that the density at the surfaces of the membranes calculated using the porosity of the surfaces and the evaluated density of the membranes based on the density of the surfaces of the membranes reflect not only the characteristics at the surfaces of the membranes but also across the thickness, i.e., the characteristics of the whole membranes.
[Table 2]

**Table 2**

| Sample No. | Sulfonation conditions | | Solution mixing conditions | | | Hydrothermal treatment conditions | | | Evaluation of membrane | | | | |
|---|---|---|---|---|---|---|---|---|---|---|---|---|---|
| | Soaking time in conc. sulfuric acid (day) | FTIR-ATR peak ratio T₁₆₀₁/T₁₁₂₇ | Cation ratio (Mg²⁺/Al³⁺) | Urea ratio (urea/NO₃⁻) | Molar concentration of all metal ions (Mg²⁺+Al³⁺) (mol/L) | Temp. (°C) | Time (day) | Heating rate (°C/h) | Porosity at cross-section (%) | Porosity at surface (%) | Membrane density at surface (%) | Density | Crystallographic orientation |
| 1 | 3 | 0.894 | 2 | 4 | 0.200 | 70 | 7 | 150 | - | 18.8 | 81.2 | B | A |
| 2 | 3 | 0.894 | 2 | 4 | 0.253 | 70 | 7 | 150 | 22.9 | 19.7 | 80.3 | B | A |
| 3 | 3 | 0.894 | 2 | 4 | 0.267 | 70 | 7 | 150 | - | 11.5 | 88.5 | B | A |
| 4 | 3 | 0.894 | 2 | 4 | 0.280 | 70 | 7 | 150 | - | 26.1 | 73.9 | C | B |
| 5 | 6 | 0.921 | 2 | 4 | 0.280 | 70 | 7 | 150 | - | 13.5 | 86.5 | B | A |
| 6 | 12 | 0.941 | 2 | 4 | 0.240 | 70 | 7 | 150 | - | 14.3 | 85.7 | B | A |
| 7 | 12 | 0.941 | 2 | 4 | 0.253 | 70 | 7 | 150 | - | - | - | - | A |
| 8 | 12 | 0.941 | 2 | 4 | 0.267 | 70 | 7 | 150 | - | - | - | - | A |
| 9 | 12 | 0.941 | 2 | 4 | 0.280 | 70 | 7 | 150 | 4.8 | 6.5 | 93.5 | A | A |
| 10 | 12 | 0.941 | 2 | 4 | 0.320 | 70 | 7 | 150 | - | 11.6 | 88.4 | B | A |
| 11 | 3 | 0.894 | 3 | 4 | 0.200 | 70 | 7 | 150 | - | 45.8 | 54.2 | C | B |
| 12 | 3 | 0.894 | 2 | 5 | 0.200 | 70 | 7 | 150 | - | 18.8 | 81.2 | B | A |
| 13 | 3 | 0.894 | 2 | 4 | 0.200 | 90 | 7 | 150 | - | 31.3 | 68.7 | C | B |
| 14 | 3 | 0.894 | 2 | 5 | 0.200 | 90 | 7 | 150 | - | 22.0 | 78.0 | C | B |
| 15 | 3 | 0.894 | 2 | 4 | 0.200 | 70 | 14 | 150 | - | 23.4 | 76.6 | C | A |
| 16 | 3 | 0.894 | 2 | 4 | 0.200 | 70 | 7 | 10 | - | 23.6 | 76.4 | C | B |
| 17 | 12 | 0.941 | 2 | 4 | 0.400 | 70 | 7 | 150 | - | - | - | - | B |
| 18* | 0 | 0.861 | 2 | 4 | 0.200 | 70 | 7 | 150 | - | 100.0 | 0.0 | D | - |

| | | | | | | | | | | | | | |
|---|---|---|---|---|---|---|---|---|---|---|---|---|---|
| * indicates this sample is comparative | | | | | | | | | | | | | |

Table 2 demonstrates that all samples 1 to 17 are generally dense membranes having a desired crystallographic orientation. In particular, samples 5 to 10 containing sulfonate groups in large amounts (i.e., high density) by long-time soaking for sulfonation are high density membranes having a high level of crystallographic orientation. In contrast, sample 18 using the non-sulfonated polystyrene substrate cannot cause nucleation of LDH and thus cannot have a shape of LDH membrane.

## Claims

1. A method of forming a layered double hydroxide dense membrane on the surface of a porous substrate, the layered double hydroxide dense membrane comprising a layered double hydroxide represented by the formula: M²⁺₁₋ₓM³⁺ₓ(OH)₂Aⁿ⁻_{x/n}·mH₂O where M²⁺ represents a divalent cation, M³⁺ represents a trivalent cation, Aⁿ⁻ represents an n-valent anion, n is an integer of 1 or more, x is 0.1 to 0.4, and m is any real number, the method comprising the steps of:
(a) providing a porous substrate;
(b) evenly depositing, on the porous substrate, a nucleation material capable of providing a nucleus from which the crystal growth of the layered double hydroxide starts; and
(c) hydrothermally treating the porous substrate in an aqueous stock solution containing a constituent element of the layered double hydroxide to form the layered double hydroxide dense membrane on the surface of the porous substrate.

2. The method according to claim 1, wherein the nucleus is a chemical species providing an anion capable of entering between layers of a layered double hydroxide, a chemical species providing a cation capable of constituting a layered double hydroxide, or a layered double hydroxide.

3. The method according to claim 2, wherein the nucleus is a chemical species providing an anion capable of entering between layers of a layered double hydroxide, and the anion is at least one selected from the group consisting of CO₃²⁻, OH⁻, SO₃⁻, SO₃²⁻, SO₄²⁻, NO₃⁻, Cl⁻, and Br.

4. The method according to claim 2 or 3, wherein the nucleation material is deposited on the porous substrate through deposition of a polymer on the surface of the porous substrate and subsequent introduction of the anion-providing chemical species into the polymer.

5. The method according to claim 2 or 3, wherein the nucleation material is deposited on the porous substrate through deposition of carbon on the surface of the porous substrate and subsequent bonding of the anion-providing chemical species to the carbon.

6. The method according to claim 4 or 5, wherein the anion is SO₃⁻, SO₃²⁻, and/or SO₄²⁻, and the anion-providing chemical species is introduced into the polymer or bonded to the carbon by sulfonation.

7. The method according to claim 4 or 6, wherein the polymer is polystyrene.

8. The method according to any one of claims 4, 6, and 7, wherein the polymer is deposited on the porous substrate through application of a solution containing the polymer to the surface of the porous substrate.

9. The method according to claim 8, wherein the solution is applied by spin coating.

10. The method according to claim 5 or 6, wherein the carbon is deposited on the porous substrate by vapor deposition.

11. The method according to claim 5 or 6, wherein the carbon is deposited on the porous substrate by a process involving application of a resin and carbonization of the resin, or a process involving application of a resin, thermal curing of the resin, and carbonization of the resin.

12. The method according to claim 2 or 3, the nucleation material is deposited on the porous substrate through treatment of the surface of the porous substrate with a surfactant containing the anion-providing chemical species as a hydrophilic moiety.

13. The method according to claim 12, wherein the anion is SO₃⁻, SO₃²⁻, and/or SO₄²⁻.

14. The method according to claim 2, wherein the nucleus is a chemical species providing a cation capable of constituting a layered double hydroxide, and the cation is Al³⁺.

15. The method according to claim 14, wherein the nucleation material is at least one aluminum compound selected from the group consisting of oxides, hydroxides, oxyhydroxides, and hydroxy complexes of aluminum.

16. The method according to claim 15, wherein the nucleation material is deposited on the porous substrate through application of a sol containing the aluminum compound to the porous substrate.

17. The method according to claim 16, wherein the sol is applied by spin coating.

18. The method according to claim 15, wherein the nucleation material is deposited on the porous substrate through formation of the aluminum compound on the surface of the porous substrate by hydrothermal treatment of the porous substrate in an aqueous solution containing at least aluminum.

19. The method according to claim 18, wherein steps (b) and (c) are continuously performed in the same hermetic container.

20. The method according to claim 18, wherein steps (b) and (c) are separately performed in this order.

21. The method according to claim 15, wherein the nucleation material is deposited on the porous substrate through vapor deposition of aluminum on the surface of the porous substrate and subsequent conversion of the aluminum into the aluminum compound by hydrothermal treatment in an aqueous solution.

22. The method according to claim 2, wherein the nucleus is a chemical species providing a cation capable of constituting a layered double hydroxide, and the cation is at least one of Mn²⁺, Mn³⁺, and Mn⁴⁺.

23. The method according to claim 22, wherein the nucleation material is manganese oxide.

24. The method according to claim 22 or 23, wherein the nucleation material is deposited on the porous substrate through process (i) involving application of a sol containing manganese oxide to the porous substrate, or process (ii) involving application of a solution or sol containing a manganese compound capable of forming manganese oxide by heating, and subsequent oxidative decomposition of the manganese compound by thermal treatment into manganese oxide.

25. The method according to claim 24, wherein the manganese compound is manganese nitrate.

26. The method according to claim 2, wherein the nucleus is a layered double hydroxide, and the nucleation material is deposited on the porous substrate through application of a sol containing the layered double hydroxide to the surface of the porous substrate.

27. The method according to claim 26, wherein the sol is applied by spin coating.

28. The method according to claim 1 or 2, wherein the nucleus is a layered double hydroxide, and the nucleation material is deposited on the porous substrate through vapor deposition of aluminum on the surface of the porous substrate and subsequent conversion of the aluminum into a layered double hydroxide by hydrothermal treatment in an aqueous solution containing a constituent element, other than aluminum, of the layered double hydroxide.

29. The method according to any one of claims 1 to 28, wherein the hydrothermal treatment in step (c) is performed in a hermetic container at 60 to 150°C.

30. The method according to any one of claims 1 to 29, wherein M²⁺ comprises Mg²⁺, M³⁺ comprises Al³⁺, and Aⁿ⁻ comprises OH⁻ and/or CO₃²⁻ in the formula.

31. The method according to any one of claims 1 to 30, wherein the aqueous stock solution used in step (c) contains magnesium ions (Mg²⁺) and aluminum ion (Al³⁺) in a total concentration of 0.20 to 0.40 mol/L, and further contains urea.

32. The method according to claim 31, wherein the aqueous stock solution used in step (c) contains dissolved magnesium nitrate and aluminum nitrate, and thereby contains nitrate ions in addition to the magnesium ions and the aluminum ions.

33. The method according to claim 32, wherein the molar ratio of the urea to the nitrate ions (NO₃⁻) is 4 to 5 in the aqueous stock solution used in step (c).

34. The method according to any one of claims 1 to 33, wherein the porous substrate comprises at least one selected from the group consisting of ceramic materials, metal materials, and polymer materials.

35. The method according to claim 34, the porous substrate comprises a ceramic material, and the ceramic material is at least one selected from the group consisting of alumina, zirconia, titania, magnesia, spinel, calcia, cordierite, zeolite, mullite, ferrite, zinc oxide, and silicon carbide.

36. The method according to any one of claims 1 to 35, wherein the porous substrate has an average pore size of 0.001 to 1.5 µm.

37. The method according to any one of claims 1 to 36, wherein the surface of the porous substrate has a porosity of 10 to 60%.

38. The method according to any one of claims 1 to 37, wherein the layered double hydroxide dense membrane constituting the layered double hydroxide dense membrane comprises an aggregation of platy particles of the layered double hydroxide, and the platy particles are oriented such that the tabular faces of the platy particles are substantially perpendicular to or oblique to the surface of the porous substrate.

39. The method according to any one of claims 1 to 38, wherein the layered double hydroxide dense membrane has water impermeability.

40. The method according to any one of claims 1 to 39, wherein the layered double hydroxide dense membrane is used as a separator for a battery.

41. A method of using a layered double hydroxide dense membrane, comprising utilizing a layered double hydroxide dense membrane formed by the method according to any one of claims 1 to 39 as a separator for a battery.
